(19) Europäisches Patentamt
European Patent Office
Office européen des brevets

(11) **EP 2 224 269 B1**

(12) **EUROPEAN PATENT SPECIFICATION**

(45) Date of publication and mention
of the grant of the patent:
**25.05.2016 Bulletin 2016/21**

(21) Application number: **08863799.6**

(22) Date of filing: **22.12.2008**

(51) Int Cl.:
***G02B 6/124*** *(2006.01)*

(86) International application number:
**PCT/JP2008/073313**

(87) International publication number:
**WO 2009/081902 (02.07.2009 Gazette 2009/27)**

(54) **Manufacturing method of an optical waveguide dispersion compensating device**

Herstellungsverfahren einer Ausgleichsvorrichtung für Wellenlängendispersion in Form eines optischen Wellenleiters

Procédé de fabrication d'un dispositif guide d'onde de compensation de dispersion de longueurs d'onde

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.12.2007 JP 2007331006**

(43) Date of publication of application:
**01.09.2010 Bulletin 2010/35**

(73) Proprietor: **Fujikura Ltd.**
**Tokyo 135-8512 (JP)**

(72) Inventors:
• **GUAN, Ning**
**Sakura-shi**
**Chiba 285-8550 (JP)**
• **OGAWA, Kensuke**
**Sakura-shi**
**Chiba 285-8550 (JP)**

(74) Representative: **Cabinet Plasseraud**
**66, rue de la Chaussée d'Antin**
**75440 Paris Cedex 09 (FR)**

(56) References cited:
| | |
|---|---|
| **JP-A- 11 308 170** | **JP-A- H11 308 170** |
| **JP-A- 2001 053 680** | **JP-A- 2001 281 474** |
| **JP-A- 2004 029 439** | **JP-A- 2004 029 439** |
| **JP-A- 2004 077 665** | **JP-A- 2004 077 665** |
| **US-A1- 2004 258 358** | **US-A1- 2005 111 792** |

• **GHIE-HUGH SONG ET AL.: 'Design of corrugated waveguide filters by the Gel'fand-Levitan-Marchenko inverse-scattering method' J. OPT. SOC. AM. A vol. 2, no. LL, November 1985, pages 1905 - 1915, XP008136907**
• **GIA-WEI CHERN ET AL.: 'Analysis and design of almost-periodic vertical-grating-assisted codirectional coupler filters' APPLIED OPTICS vol. 39, no. 25, 01 September 2000, pages 4629 - 4637, XP008136901**

**Description**

[Technical Field]

The present invention relates to a small-sized optical waveguide-type wavelength dispersion compensation device that compensates the wavelength dispersion of an optical fiber, and a method of manufacturing the same. This device can be used for an optical fiber communication network or the like.

Priority is claimed on Japanese Patent Application No. 2007-331006, filed December 21, 2007.

[Background Art]

In optical communication, widening the bandwidth and increasing the speed of transmission of dense wavelength-division multiplexing (DWDM) is rapidly promoted. In order to perform high-speed transmission, it is desirable to use an optical fiber in which not only the wavelength dispersion is as small as possible in the transmission bandwidth, but the wavelength dispersion does not become zero in order to suppress non-linear effects. In addition, optical fibers that are already extensively installed are frequently used in a wavelength region in which the dispersion is great.

For example, a standard single-mode fiber (S-SMF) that has zero dispersion around the wavelength of 1.3 $\mu$m is used in the band of wavelength 1.53 to 1.63 $\mu$m as a result of the practical implementation of Erbium-doped optical fiber amplifiers. A dispersion shifted fiber (DSF) that shifts the zero dispersion to the vicinity of wavelength 1.55 $\mu$m is used not only in the C band, but also in the S band and L band. In addition, there are various types of non-zero dispersion shifted fiber (NZ-DSF) that do not have zero dispersion at a wavelength of 1.55 $\mu$m. In the case of using these optical fibers in DWDM, the compensation technique of the residual dispersion over a wide wavelength range is important.

Various techniques are used for dispersion compensation. Among them, dispersion compensation that uses a dispersion compensation fiber (DCF) is most implemented technique (for example, refer to Patent Documents 1 and 2). In DCF, the refractive index distribution of the optical fiber is controlled so that the desired dispersion compensation amount is obtained. However, usually the DCF must be of a length that is to the optical fiber that is the target of compensation. For that reason, in the case of producing this DCF as a module, not only is a large installation space required, but the transmission losses also cannot be ignored. In addition, it is necessary to perform accurate control of the refractive index distribution in the DCF, and so not only is there the aspect of the fabrication being difficult, but it is often difficult to satisfy the dispersion compensation amount that is required in a wide band.

Fiber Bragg grating (FBG) is one of the techniques often used for dispersion compensation (for example, refer to Patent Document 3). In FBG, a fiber is irradiated by UV light to alter the refractive index of the fiber core, and by forming a grating due to a variation in the refractive index, dispersion compensation is performed. Thereby, the realization of a miniature device for dispersion compensation becomes possible, but control of the change of the refractive index is difficult. Moreover, since there is a limit to the change in the refractive index of a fiber, there is a limit to the dispersion compensation characteristics that can be realized. Moreover, there is a limit to the miniaturization and large-scale production of a device that employs an FBG.

There has also been proposed a structure that, by dividing the region of performing dispersion compensation into channels, superimposes chirped FBGs that perform the dispersion compensation in each channel at one location (for example, refer to Patent Document 4). By using this, the length of fiber that is required becomes shorter. However, since this convention technique is designed to simply superimpose a plurality of FBGs, the structures of the channels approach each other, and thus exert an influence on the characteristics of each channel. For that reason, there is a limit to the dispersion compensation characteristics that can be realized.

Also, since the change of the refractive index that is required in order to superimpose FBGs is not obtained by UV irradiation, structures that cannot be realized also arise.

A planar lightwave circuit (PLC) can perform dispersion compensation using an optical path that is constructed on a plane. A lattice-form PLC is one example thereof (for example, refer to Non-Patent Document 1). However, a lattice-form PLC controls dispersion by cascaded coupled resonators, and is based on the principle of a digital infinite impulse response (IIR). For that reason, the dispersion amount that can be realized is limited.

A set-up has also been considered that demultiplexes with an arrayed waveguide grating (AWG), adding a path difference to each channel, and after adjusting the delay time, again multiplexes with a collimator lens (for example, Patent Document 5). However, in this method, the structure is complex, and not only is the fabrication difficult, but the space that is required is large.

A virtually imaged phased array (VIPA) -type dispersion compensator is a dispersion compensation device that includes a wavelength dispersion element (VIPA plate) that consists of both sides of a thin plate being coated with a reflective film, and a reflective mirror (for example, refer to Patent Document 6). This device adjusts the dispersion with a three-dimensional structure. For that reason, the device is structurally complex, and extremely high precision is required for fabrication. Examples of the related art can be found in the following documents:

[Patent Document 1] Japanese Patent No. 3857211

[Patent Document 2] Japanese Patent No. 3819264

[Patent Document 3] Japanese Unexamined Patent Application, First Publication No. 2004-325549

[Patent Document 4] PCT International Application No. WO 03/010586 pamphlet

[Patent Document 5] Japanese Patent No. 3852409

[Patent Document 6] Japanese Unexamined Patent Application, First Publication No. 2005-275101

[Patent Document 7] JP 2004 077665

[Non-Patent Document 1] K. Takiguchi, et. al, "Dispersion slope equalizer for dispersion shifted fiber using a lattice-form programmable optical filter on a planar lightwave circuit," Journal of Lightwave Technology, pp. 1647-1656, vol. 16, no. 9, 1998

[Disclosure of the Invention]

[Problems to be Solved by the Invention]

The problems in the conventional art described above are as follows.

1. Dispersion compensation that uses DCF uses long fibers, and so the required space is large and miniaturization is difficult. Also, there are limits to the dispersion compensation characteristics that can be realized.

2. In dispersion compensation that uses FBG, there are limits to the dispersion compensation characteristics that can be realized.

3. In dispersion compensation that uses superimposing of FBGs, there are limits to the dispersion compensation characteristics that can be realized.

4. In dispersion compensation that uses lattice-form PLCs, the dispersion compensation amount that can be realized is small.

5. A PLC with an AWG has a complicated structure, and fabrication is difficult and costly. Furthermore a large space is required, and downsizing of the device is difficult.

6. A VIPA-type dispersion compensator has a complicated structure, and so fabrication is difficult and costly.

The present invention was achieved in view of the above circumstances, and has as its object to provide an optical waveguide-type wavelength dispersion compensation device that can be miniaturized, has excellent dispersion compensation characteristics, and can be fabricated easily and at a low cost.

[Means for Solving the Problems]

The present invention adopts the followings in order to solve the aforementioned issues and achieve the above object.

(1) A manufacturing method of an optical waveguide-type wavelength dispersion compensation device of the present invention has an optical waveguide as a reflection-type wavelength dispersion compensation device. An equivalent refractive index of a core changes unevenly along the light propagation direction by changing the physical dimensions of the core that is embedded in a cladding. Designing the core by: (a) setting a first desired reflection spectrum, ignoring transmission losses of the optical waveguide, and designing an optical waveguide that is capable of compensating a wavelength dispersion of an optical fiber to be compensated; (b) deriving a wavelength dependency characteristic of a transmission loss amount of the optical waveguide from an effective length of the optical waveguide designed in process (a); and (c) adding a reverse dependency characteristic of the wavelength dependency characteristic to the first reflection spectrum to correct it to a second reflection spectrum, and redesigning the equivalent refractive index distribution of the optical waveguide designed in the process (a) by using the second reflection spectrum, and forming the optical waveguide (10) including the core designed in the processes (a) to (c).

(2) A manufacturing method of the optical waveguide-type wavelength dispersion compensation device wherein a wavelength region to be dispersion compensated of the optical waveguide may be divided into a plurality of channels; and the optical waveguide may have a dispersion compensation characteristic in which wavelength dispersion of the optical fiber to be compensated is compensated in the wavelength region of each channel.

(3) A manufacturing method of the optical waveguide-type wavelength dispersion compensation device wherein a width of the core may be unevenly distributed along the light propagation direction.

(4) A manufacturing method of the optical waveguide-type wavelength dispersion compensation device wherein a width of the core may be unevenly distributed along the light propagation direction so that both sides in the width direction of the core become symmetrical from a center of the core.

(5) A manufacturing method of the optical waveguide-type wavelength dispersion compensation device wherein a width of the core may be unevenly distributed along the light propagation direction so that both sides in the width direction of the core become asymmetrical from a center of the core.

(6) A manufacturing method of the optical waveguide-type wavelength dispersion compensation device wherein a width of the core may be unevenly distributed along the light propagation direction on one side only among both sides in the width direction of the core from a center of the core.

(7) A manufacturing method of the optical waveguide-type wavelength dispersion compensation device wherein a core may be provided in a linear manner within the optical waveguide.

(8) A manufacturing method of the optical waveguide-type wavelength dispersion compensation device wherein a core may be provided in a meandering manner within the optical waveguide.

(9) A manufacturing method of the optical waveguide-type wavelength dispersion compensation device wherein a width of the core may have a distribution shape in which width fluctuations gradually increase from one end side in the light propagation direction of the optical waveguide toward the other end side, and have a fluctuation maximal portion in the vicinity of the other end side.

(10) A manufacturing method of the optical waveguide-type wavelength dispersion compensation device wherein a width of the core may have a distribution shape comprising: a center portion in which the width fluctuations are small from one end side in the light propagation direction of the optical waveguide toward the other end side; a first fluctuation portion on one side in which the width fluctuations are greater than the center portion; and a fluctuation maximal portion on the other end side in which the width fluctuations are greater than the first fluctuation portion.

(11) A manufacturing method of the optical waveguide-type wavelength dispersion compensation device wherein one end of the optical waveguide may be a transmitting end, and the other end of the optical waveguide may be a reflecting end; the transmitting end may be a non-reflecting end and terminated; and the optical output may be taken out via a circulator or a directional coupler at the reflecting end.

(12) A manufacturing method of the optical waveguide-type wavelength dispersion compensation device wherein the optical waveguide may have a dispersion compensation characteristic that negates wavelength dispersion of the optical fiber of a predetermined length to be compensated, in a predetermined wavelength band.

(13) A manufacturing method of the optical waveguide-type wavelength dispersion compensation device wherein the optical waveguide may have a characteristic in which, with a central wavelength $\lambda_C$ in a range of 1490 nm $\leq \lambda_C \leq$ 1613 nm, and an operating band $\Delta$BW in a range of 0.1 nm $\leq \Delta$BW $\leq$ 60 nm, the dispersion (D) is in a range of -3,000 ps/nm $\leq$ D $\leq$ 3,000 ps/nm, and the relative dispersion slope (RDS) is in a range of -0.1 nm$^{-1}$ 1 $\leq$ RDS $\leq$ 0.1 nm$^{-1}$.

(14) A manufacturing method of the optical waveguide-type wavelength dispersion compensation device wherein an equivalent refractive index distribution of the core along the light propagation direction of the waveguide may be designed by a design method, the design method comprises: solving an inverse scattering problem that numerically derives a potential function from the spectrum data of a reflection coefficient using a Zakharov-Shabat equation; and estimating a potential for realizing a desired reflection spectrum from a value obtained by the inverse scattering problem.

(15) A manufacturing method of the optical waveguide-type wavelength dispersion compensation device wherein the equivalent refractive index distribution of the core along the light propagation direction of the waveguide may be designed by: reducing to a Zakharov-Shabat equation having a potential that is derived from a differential of a logarithm of the equivalent refractive index of the optical waveguide, using a wave equation that introduces a variable of the amplitude of the electric power wave that propagates at the front and rear of the optical waveguide, and solving as an inverse scattering problem that numerically derives a potential function from spectrum data of a reflection coefficient; estimating a potential for realizing a desired reflection spectrum from a value obtained by the inverse scattering problem; finding the equivalent refractive index based on the potential; and calculating a dimensions of the core along the light propagating direction of the optical waveguide from the relationship between a predetermined thickness of the core, the equivalent refractive index, and the dimensions of the core that are found in advance.

(16) A manufacturing method of the optical waveguide-type wavelength dispersion compensation device wherein the equivalent refractive index distribution of the core along the light propagating direction of the optical waveguide may be a nearly periodic structure in the scale of the central wavelength of the band to be dispersion compensated; and may have a two-hierarchical structure of a non-periodic structure that is decided by the inverse scattering problem in a larger scale than the central wavelength.

(17) A method of manufacturing an optical waveguide-type wavelength dispersion compensation device according to the above (1), the method of the present invention comprises: providing a lower cladding layer of an optical waveguide; providing a core layer with a refractive index that is greater than the lower cladding layer on the lower cladding layer; forming the core by applying a processing that, in the core layer, leaves a predetermined core shape designed so that an equivalent refractive index of the core changes unevenly along a light propagation direction and removes the other portions; providing an upper cladding layer to cover the core.

[Effect of the Invention]

The optical waveguide-type wavelength dispersion compensation device disclosed in the aforementioned (1) has an optical waveguide as a reflection-type wavelength dispersion compensation device in which the equivalent refractive index of the core that is embedded in cladding changes unevenly along the light propagation direction. For that reason, it can be miniaturized compared to the prior art that uses a dispersion compensation fiber or the like, and the installation space is less.

The optical waveguide-type wavelength dispersion compensation device disclosed in the aforementioned (1) obtains a superior dispersion compensation characteristic that can be achieved broadening, compared to dispersion compensation that uses a convention FBG.

The optical waveguide-type wavelength dispersion compensation device disclosed in the aforementioned (1) has a structure that can be manufactured simply and at a low cost compared to a dispersion compensation device such as a PLC or VIPA.

Furthermore, the optical waveguide-type wavelength dispersion compensation device disclosed in the aforementioned (1) has a core that is designed by (a) setting a desired reflection spectrum, ignoring transmission losses of the optical waveguide, and designing an optical waveguide that is capable of compensating the wavelength dispersion of an optical fiber to be compensated; (b) deriving a wavelength dependency characteristic of a transmission loss amount of this optical waveguide from the effective length of the optical waveguide designed in process (a); and (c) adding a reverse dependency characteristic of the wavelength dependency characteristic to the reflection spectrum to correct a reflection spectrum, and redesigning an equivalent refractive index distribution of the optical waveguide designed in the process (a). For that reason, the group delay characteristic obtained by this optical waveguide-type wavelength dispersion compensation device has less fluctuations from the desired characteristic compared to the case of not considering the transmission loss of the device. As a result, it is possible to improve the transmission characteristic of a transmission system that incorporates optical fiber.

According to the method of manufacturing an optical waveguide-type wavelength dispersion compensation device disclosed in the aforementioned (18), it is possible to manufacture at a low cost and efficiently a compact dispersion compensation device that has an excellent dispersion compensation characteristic as described above.

[Brief Description of the Drawings]

FIG. 1 is an schematic perspective view showing a NPWG structure of the wavelength dispersion compensation device of the present invention.

FIG. 2 is a graph showing the potential distribution of a dispersion compensation device that dispersion compensates 10 channels of an optical fiber having a length of 100 km, in which the transmission loss of the dispersion compensation device is ignored.

FIG. 3 is a graph showing the group delay characteristic of a dispersion compensation device that has the potential distribution of FIG. 2.

FIG. 4 is a graph showing the reflectance characteristic of a dispersion compensation device that has the potential distribution of FIG. 2.

FIG. 5 is a configuration diagram showing the transmission evaluation system that is used in evaluating the transmission characteristic of the dispersion compensation device of the present invention.

FIG. 6 is a graph showing the waveform of the nonreturn-to-zero (NRZ) initial pulse of 10 Gb/s.

FIG. 7 is a graph showing the eye pattern of the nonreturn-to-zero (NRZ) initial pulse of 10 Gb/s.

FIG. 8 is a graph showing the spectrum of the nonreturn-to-zero (NRZ) initial pulse of 10 Gb/s.

FIG. 9 is a graph showing the waveform of a pulse after passing through a S-SMF having a length of 100 km.

FIG. 10 is a graph showing the eye pattern of a pulse after passing through a S-SMF having a length of 100 km.

FIG. 11 is a graph showing the spectrum of a pulse after passing through a S-SMF having a length of 100 km.

FIG. 12 is a graph showing the waveform of a pulse after passing through a dispersion compensation device in which it is assumed there are no transmission losses.

FIG. 13 is a graph showing the eye pattern of a pulse after passing through a dispersion compensation device in which it is assumed there are no transmission losses.

FIG. 14 is a graph showing the spectrum of a pulse after passing through a dispersion compensation device in which it is assumed there are no transmission losses.

FIG. 15 is a graph showing the group delay characteristic of a dispersion compensation device that dispersion compensates 10 channels of an optical fiber having a length of 100 km, in which the transmission loss of the dispersion compensation device is assumed to be 10 dB.

FIG. 16 is a graph showing the reflectance characteristic of a dispersion compensation device that dispersion compensates 10 channels of an optical fiber having a length of 100 km, in which the transmission loss of the dispersion compensation device is assumed to be 10 dB.

FIG. 17 is a graph showing the waveform of a pulse after passing through a dispersion compensation device that dispersion compensates 10 channels of an optical fiber having a length of 100 km, in which the transmission loss of the dispersion compensation device is assumed to be 10 dB.

FIG. 18 is a graph showing the eye pattern of a NRZ pulse of 10 Gb/s after passing through a dispersion compensation device that dispersion compensates 10 channels of an optical fiber having a length of 100 km, in which the transmission loss of the dispersion compensation device is assumed to be 10 dB.

FIG. 19 is a graph showing the spectrum of a pulse after passing through a dispersion compensation device that dispersion compensates 10 channels of an optical fiber having a length of 100 km, in which the transmission loss of the dispersion compensation device is assumed to be 10 dB.

FIG. 20 is a graph showing the eye pattern of a NRZ initial pulse of 40 Gb/s.

FIG. 21 is a graph showing the eye pattern of a NRZ pulse of 40 Gb/s after passing through a S-SMF having a length of 100 km.

FIG. 22 is a graph showing the eye pattern of a NRZ pulse of 40 Gb/s after passing through a dispersion compensation device that dispersion compensates 10 channels of an optical fiber having a length of 100 km, in which the transmission loss of the dispersion compensation device is assumed to be 0 dB.

FIG. 23 is a graph showing the eye pattern of a 40 Gb/s pulse after passing through a dispersion compensation device that dispersion compensates 10 channels of an optical fiber having a length of 100 km, in which the transmission loss of the dispersion compensation device is assumed to be 2 dB.

FIG. 24 is a graph showing the eye pattern of a 40 Gb/s pulse after passing through a dispersion compensation device that dispersion compensates 10 channels of an optical fiber having a length of 100 km, in which the transmission loss of the dispersion compensation device is assumed to be 5 dB.

FIG. 25 is a graph showing the eye pattern of a NRZ pulse of 40 Gb/s after passing through a dispersion compensation device that dispersion compensates 10 channels of an optical fiber having a length of 100 km, in which the transmission loss of the dispersion compensation device is assumed to be 10 dB.

FIG. 26A is a schematic plan view showing an example of the distribution shape of the core width.

FIG. 26B is a schematic plan view showing a modification of the distribution shape of the core width.

FIG. 27 is a schematic plan view showing an example of the core in a meandering shape.

FIG. 28 is a configuration drawing showing one embodiment of the dispersion compensation device of the present invention.

FIG. 29 is a graph showing the reflectance characteristic of a dispersion compensation device of Comparative Example 1 that dispersion compensates 10 channels of an optical fiber having a length of 100 km, in which the transmission loss of the dispersion compensation device is assumed to be 10 dB.

FIG. 30 is a graph showing the reflectance characteristic of the dispersion compensation device of Example 1 that dispersion compensates 10 channels of an optical fiber having a length of 100 km, which is designed so that the loss increases as the wavelength becomes longer in the channel, with the maximum loss differential becoming 20 dB. Note that the transmission loss of the dispersion compensation device is assumed to be 10 dB.

FIG. 31 is a graph showing the group delay characteristic of the dispersion compensation device of Example 1 that dispersion compensates 10 channels of an optical fiber having a length of 100 km, which is designed so that the loss increases as the wavelength becomes longer in the channel, with the maximum loss differential becoming 20 dB. Note that the transmission loss of the dispersion compensation device is assumed to be 10 dB.

FIG. 32 is a graph showing the potential distribution of the dispersion compensation device of Example 1 that dispersion compensates 10 channels of an optical fiber having a length of 100 km, which is designed so that the loss increases as the wavelength becomes longer in the channel, with the maximum loss differential becoming 20 dB.

FIG. 33 is a graph showing the eye pattern of a NRZ pulse of 40 Gb/s after passing through the dispersion compensation device of Example 1 that dispersion compensates 10 channels of an optical fiber having a length of 100 km, which is designed so that the loss increases as the wavelength becomes longer in the channel, with the maximum loss differential becoming 20 dB.

FIG. 34 is a graph showing the eye pattern of a NRZ pulse of 40 Gb/s after passing through the dispersion compensation device of Comparative Example 1 in which the transmission loss is not corrected. Note that the transmission loss of the dispersion compensation device is assumed to be 10 dB.

FIG. 35 is a graph showing the reflectance characteristic of the dispersion compensation device of Comparative Example 2 that dispersion compensates 10 channels of an optical fiber having a length of 100 km, with the transmission loss of the dispersion compensation device assumed to be 10 dB.

FIG. 36 is a graph showing the reflectance characteristic of the dispersion compensation device of Example 2 that dispersion compensates 10 channels of an optical fiber having a length of 100 km, which is designed so that the loss increases as the wavelength becomes longer in the channel, with the maximum loss differential becoming 25 dB. Note that the transmission loss of the dispersion compensation device is assumed to be 10 dB.

FIG. 37 is a graph showing the group delay characteristic of the dispersion compensation device of Example 2 that dispersion compensates 10 channels of an optical fiber having a length of 100 km, which is designed so that the loss increases as the wavelength becomes longer in the channel, with the maximum loss differential becoming 25 dB. Note that the transmission loss of the dispersion compensation device is assumed to be 10 dB.

FIG. 38 is a graph showing the potential distribution of the dispersion compensation device of Example 2 that dispersion compensates 10 channels of an optical fiber having a length of 100 km, which is designed so that the loss increases as the wavelength becomes longer in the channel, with the maximum loss differential becoming 25 dB.

FIG. 39 is a graph showing the eye pattern of a NRZ pulse of 40 Gb/s after passing through the dispersion compensation device of Example 2 that dispersion compensates 10 channels of an optical fiber having a length of 100 km, which is designed so that the loss increases as the wavelength becomes longer in the channel, with the maximum loss differential becoming 25 dB.

FIG. 40 is a graph showing the eye pattern of a NRZ pulse of 40 Gb/s after passing through the dispersion compensation device of Comparative Example 2 in which the transmission loss is not corrected. Note that the transmission loss of the dispersion compensation device is assumed to be 10 dB.

FIG. 41 is a graph showing the reflectance characteristic of the dispersion compensation device of Comparative Example 3 that dispersion compensates 10 channels of an optical fiber having a length of 100 km, with the transmission loss of the dispersion compensation device assumed to be 10 dB.

FIG. 42 is a graph showing the reflectance characteristic of the dispersion compensation device of Example 3 that dispersion compensates 10 channels of an optical fiber having a length of 100 km, which is designed so that the loss increases as the wavelength becomes longer in the channel, with the maximum loss differential becoming 30 dB. Note that the transmission loss of the dispersion compensation device is assumed to be 10 dB.

FIG. 43 is a graph showing the group delay characteristic of the dispersion compensation device of Example 3 that dispersion compensates 10 channels of an optical fiber having a length of 100 km, which is designed so that the loss increases as the wavelength becomes longer in the channel, with the maximum loss differential becoming 30 dB. Note that the transmission loss of the dispersion compensation device is assumed to be 10 dB.

FIG. 44 is a graph showing the potential distribution of the dispersion compensation device of Example 3 that dispersion compensates 10 channels of an optical fiber having a length of 100 km, which is designed so that the loss increases as the wavelength becomes longer in the channel, with the maximum loss differential becoming 30 dB.

FIG. 45 is a graph showing the eye pattern of a NRZ pulse of 40 Gb/s after passing through the dispersion compensation device of Example 3 that dispersion compensates 10 channels of an optical fiber having a length of 100 km, which is designed so that the loss increases as the wavelength becomes longer in the channel, with the maximum loss differential becoming 30 dB.

FIG. 46 is a graph showing the eye pattern of a NRZ pulse of 40 Gb/s after passing through the dispersion compensation device of Comparative Example 3 in which the transmission loss is not corrected. Note that the transmission loss of the dispersion compensation device is assumed to be 10 dB.

FIG. 47 is a graph showing the reflectance characteristic of the dispersion compensation device of Comparative Example 4 that dispersion compensates 50 channels of an optical fiber having a length of 50 km, with the transmission loss of the dispersion compensation device assumed to be 10 dB.

FIG. 48 is a partial enlargement of FIG. 47.

FIG. 49 is a graph showing the reflectance characteristic of the dispersion compensation device of Example 4 that dispersion compensates 50 channels of an optical fiber having a length of 50 km, which is designed so that the loss increases as the wavelength becomes longer in the channel, with the maximum loss differential becoming 5 dB. Note that the transmission loss of the dispersion compensation device is assumed to be 2 dB.

FIG. 50 is a graph showing the group delay characteristic of Example 4 and Comparative Example 4 that dispersion compensate 50 channels of an optical fiber having a length of 50 km, which is designed so that the loss increases as the wavelength becomes longer in the channel, with the maximum loss differential becoming 5 dB. Note that the transmission loss of the dispersion compensation device is assumed to be 2 dB.

FIG. 51 is a graph showing the potential distribution of the dispersion compensation device of Example 4 that dispersion compensates 50 channels of an optical fiber having a length of 50 km, which is designed so that the loss increases as the wavelength becomes longer in the channel, with the maximum loss differential becoming 5 dB.

FIG. 52 is a graph showing the eye pattern of a NRZ pulse of 10 Gb/s after passing through the dispersion compensation device of Example 4 that dispersion compensates 50 channels of an optical fiber having a length of 50 km, which is designed so that the loss increases as the wavelength becomes longer in the channel, with the maximum loss differential becoming 5 dB. Note that the transmission loss of the dispersion compensation device is assumed to be 2 dB.

FIG. 53 is a graph showing the eye pattern of a NRZ pulse of 10 Gb/s after passing through the dispersion compensation device of Comparative Example 4 that dispersion compensates 50 channels of an optical fiber having a length of 50 km, ignoring the transmission loss of the dispersion compensation device. Note that the transmission loss of the dispersion compensation device is assumed to be 2 dB.

FIG. 54 is a graph showing the reflectance characteristic of the dispersion compensation device of Comparative Example 5 that dispersion compensates 50 channels of an optical fiber having a length of 50 km, with the transmission loss of the dispersion compensation device assumed to be 5 dB.

FIG. 55 is a partial enlargement of FIG. 54.

FIG. 56 is a graph showing the reflectance characteristic of the dispersion compensation device of Example 5 that dispersion compensates 50 channels of an optical fiber having a length of 50 km, which is designed so that the loss increases as the wavelength becomes longer in the channel, with the maximum loss differential becoming 12 dB. Note that the transmission loss of the dispersion compensation device is assumed to be 5 dB.

FIG. 57 is a graph showing the group delay characteristics of Example 5 and Comparative Example 5 that dispersion compensate 50 channels of an optical fiber having a length of 50 km, which is designed so that the loss increases as the wavelength becomes longer in the channel, with the maximum loss differential becoming 12 dB. Note that the transmission loss of the dispersion compensation device is assumed to be 5 dB.

FIG. 58 is a graph showing the potential distribution of the dispersion compensation device of Example 5 that dispersion compensates 50 channels of an optical fiber having a length of 50 km, which is designed so that the loss increases as the wavelength becomes longer in the channel, with the maximum loss differential becoming 12 dB.

FIG. 59 is a graph showing the eye pattern of a NRZ pulse of 10 Gb/s after passing through the dispersion compensation device of Example 5 that dispersion compensates 50 channels of an optical fiber having a length of 50 km, which is designed so that the loss increases as the wavelength becomes longer in the channel, with the maximum loss differential becoming 12 dB. Note that the transmission loss of the dispersion compensation device is assumed to be 5 dB.

FIG. 60 is a graph showing the eye pattern of a NRZ pulse of 10 Gb/s after passing through the dispersion compensation device of Comparative Example 5 that dispersion compensates 50 channels of an optical fiber having a length of 50 km, ignoring the transmission loss of the dispersion compensation device. Note that the transmission loss of the dispersion compensation device is assumed to be 5 dB.

FIG. 61 is a graph showing the reflectance characteristic of the dispersion compensation device of Comparative Example 6 that dispersion compensates 50 channels of an optical fiber having a length of 50 km, with the transmission loss of the dispersion compensation device assumed to be 10 dB.

FIG. 62 is a partial enlargement of FIG. 61.

FIG. 63 is a graph showing the reflectance characteristic of the dispersion compensation device of Example 6 that dispersion compensates 50 channels of an optical fiber having a length of 50 km, which is designed so that the loss increases as the wavelength becomes longer in the channel, with the maximum loss differential becoming 25 dB. Note that the transmission loss of the dispersion compensation device is assumed to be 10 dB.

FIG. 64 is a graph showing the group delay characteristics of Example 6 and Comparative Example 6 that dispersion compensate 50 channels of an optical fiber having a length of 50 km, which is designed so that the loss increases as the wavelength becomes longer in the channel, with the maximum loss differential becoming 25 dB. Note that the transmission loss of the dispersion compensation device is assumed to be 10 dB.

FIG. 65 is a graph showing the potential distribution of the dispersion compensation device of Example 6 that dispersion compensates 50 channels of an optical fiber having a length of 50 km, which is designed so that the loss increases as the wavelength becomes longer in the channel, with the maximum loss differential becoming 25 dB.

FIG. 66 is a graph showing the eye pattern of a NRZ pulse of 10 Gb/s after passing through the dispersion compensation device of Example 6 that dispersion compensates 50 channels of an optical fiber having a length of 50 km, which is designed so that the loss increases as the wavelength becomes longer in the channel, with the maximum loss differential becoming 25 dB. Note that the transmission loss of the dispersion compensation device is assumed to be 10 dB.

FIG. 67 is a graph showing the eye pattern of a NRZ pulse of 10 Gb/s after passing through the dispersion compensation device of Comparative Example 6 that dispersion compensates 50 channels of an optical fiber having a length of 50 km, ignoring the transmission loss of the dispersion compensation device. Note that the transmission loss of the dispersion compensation device is assumed to be 10 dB.

[Description of Reference Numerals]

10 NPWG
11 core
12 cladding
13 reflecting end
14 transmitting end
15 circulator
16 nonreflecting terminal
20 dispersion compensation device

[Best Mode for Carrying Out the Invention]

The dispersion compensation device of the present invention has an optical waveguide as a reflection-type wavelength dispersion compensation device in which the equivalent refractive index of this core changes unevenly along the light propagation direction by changing the physical dimensions of the core that is embedded in cladding.

The core of this optical waveguide is designed by (a) first, setting a first desired reflection spectrum, ignoring transmission losses of the optical waveguide, and designing an optical waveguide that is capable of compensating the wavelength dispersion of an optical fiber to be compensated; (b) next, deriving a wavelength dependency characteristic of a transmission loss amount of this optical waveguide from the effective length of the optical waveguide designed in process (a); and (c) next adding a reverse dependency characteristic of the wavelength dependency characteristic derived in (b) to the first reflection spectrum to correct it to a second reflection spectrum, and redesigning an equivalent refractive index distribution of the optical waveguide designed in the process (a) by using this second reflection spectrum.

Hereinafter, an embodiment of the optical waveguide-type wavelength dispersion compensation device (hereinbelow abbreviated to dispersion compensation device) of the present invention shall be described with reference to the drawings.

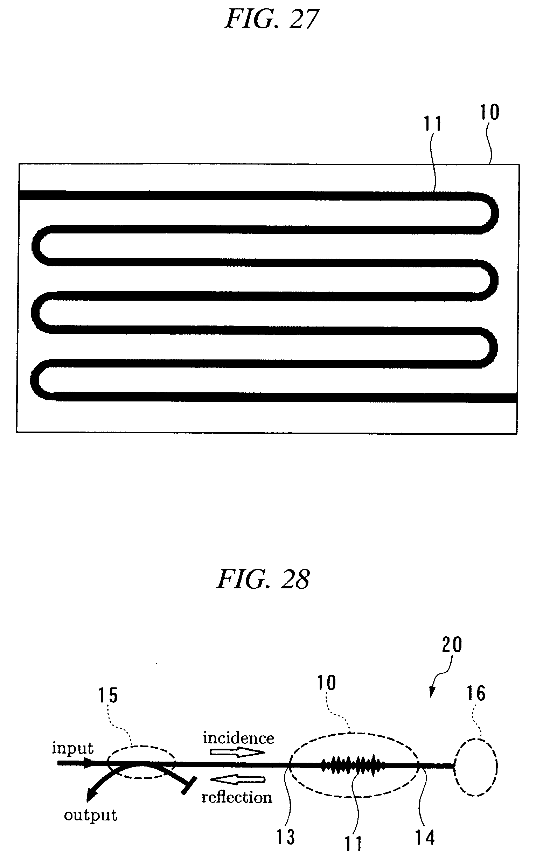

The dispersion compensation device of the present invention, as shown for example in FIG. 28, comprises an optical waveguide 10 and a circulator 15 that is connected to the reflecting end 13 side thereof. The transmitting end 14 of the optical waveguide 10 is a nonreflecting terminal 16. An optical fiber to be compensated and not illustrated is connected to the input side of the circulator 15. A downstream side optical fiber is connected to the output side of the circulator 15. This downstream side optical fiber is used in the light transmission path.

The dispersion compensation device 20 of the present invention is a reflection-type device, and the light signal that is input from the optical fiber to be compensated to the input side of the circulator 15 enters the optical waveguide 10. Then the light signal is reflected by the optical waveguide 10, and the reflected wave thereof is output via the circulator 15.

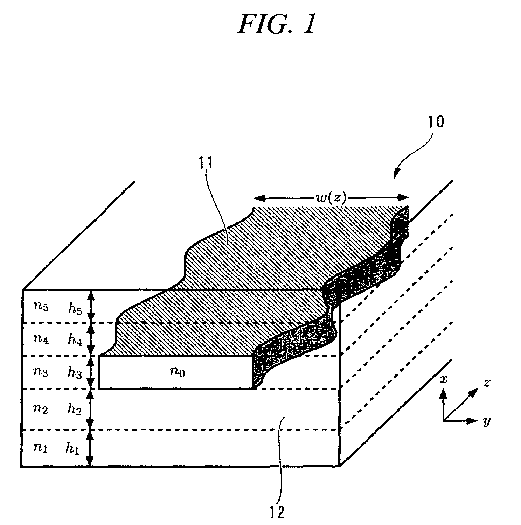

FIG. 1 is a schematic perspective view showing one embodiment of the optical waveguide that is the main constituent element of the dispersion compensation device of the present invention. As a way to causes the equivalent refractive index of the core to change unevenly along the light propagation direction, the optical waveguide of the present embodiment uses a non-uniform planar waveguide (NPWG) that has a non-uniform width in which the width w of the core is made to change along the longitudinal direction (z). Here, non-uniform indicates that the physical dimension changes along with location in the direction of travel of the waveguide. In FIG. 1, reference numeral 10 denotes NPWG, numeral 11 denotes the core and numeral 12 denotes the cladding.

The NPWG 10 of the present embodiment has the core 11 in the cladding 12. The core 11, as shown in FIG. 1, has a constant height of $h_3$. Also, the width w of the core 11 changes unevenly along the longitudinal direction (z), and changes the local equivalent refractive index in the propagation mode of the waveguide. With the change in the refractive index, a reflection-type wavelength dispersion compensation function is imparted to the NPWG 10.

As this NPWG 10, it is possible to use a silica glass-based material. In that case, for example, the cladding is formed from pure silica glass, and the core may be formed from a germanium-doped silica glass. Also, it is possible to use a resinous material.

In the case of using a silicon-based material as the NPWG 10, if control is performed by adding an electrode to this silicon-based material, it is possible to realize a variable device. Also, in the case of adding heat to this device, the waveguide elongates due to thermal expansion of the material. For that reason, the wavelength that is used shifts to the long wavelength side. By employing this characteristic, a variable device controlled by heat can be obtained.

The principle of operation of the NPWG 10 appears to be similar to the grating of FBG. However, in relation to changes in the equivalent refractive index, in contrast to changing the refractive index of the core medium as in FBG, in the NPWG 10 of the present embodiment, the equivalent refractive index is changed by changing the width of the core 11 along the longitudinal direction. In this way, in relation to changes in the equivalent refractive index, the principles of operation of the two completely differ.

In the NPWG 10, the rate of change of the equivalent refractive index obtained by changing the width of the core 11 along the longitudinal direction is great compared to the case of FBG, and fine and exact control is easy.

Since the structure of the NPWG 10 is planar, it can be fabricated in large quantities by a widely known manufacturing process and at low cost.

In the preferred embodiment of the present invention, the dispersion compensation device using the NPWG 10 includes one that employs a system of dividing the region for compensation into a plurality of channels, and performing the dispersion compensation within each channel. By using this system, the required length of the waveguide is shortened, a miniaturization of the device becomes possible, and moreover it is possible to make losses of the waveguide small.

Even in the dispersion compensation device using this NPWG 10, there is a loss in the dispersion compensation device. Due to this loss, desired characteristics are no longer acquired and degradation of the characteristics is brought about. An example shall be given below of the loss of a dispersion compensation device affecting the dispersion compensation characteristics of this device.

For example, the case is assumed of designing a dispersion compensation device that compensates the residual dispersion of a S-SMF having a length of 100 km for every channel divided by an ITU grid so as to realize a wavelength dispersion in which, in the wavelength region [1546.12 nm to 1554.13 nm], the dispersion amount D = -1700 ps/nm and the relative dispersion slope (RDS) = 0.0034 $nm^{-1}$. However, in this example, the wavelength region is divided into 10 channels in which the frequency f satisfies ($193.4 + 0.1n \leq f \leq 193.5 + 0.1 n$ THz), and wavelength dispersion is performed in each channel. Here, n expresses an integer that satisfies $-5 \leq n \leq 4$. These channels satisfy an ITU grid interval.

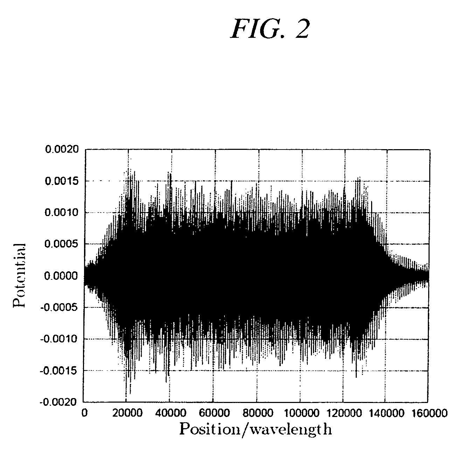

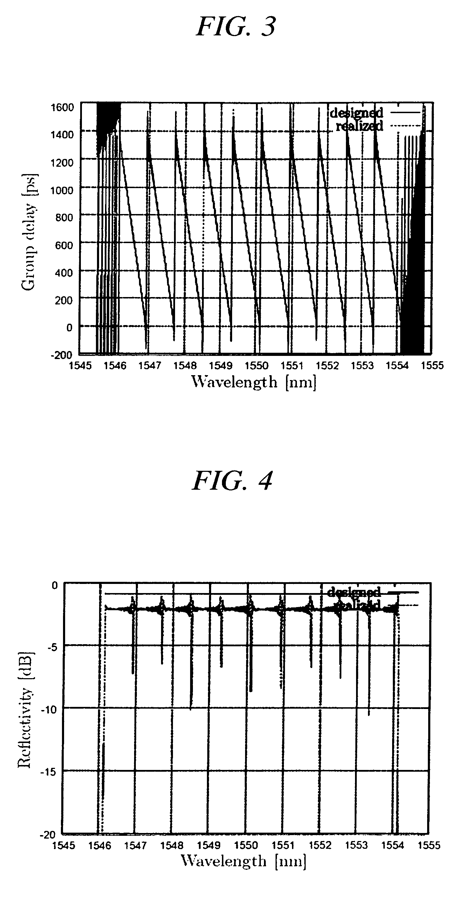

FIG. 2 is a graph that expresses the potential distribution of the dispersion compensation device of the present example. The horizontal axis of the graph expresses positions that are standardized by the central wavelength 1550.12 nm. Using this potential, in this case of disregarding the transmission loss of the dispersion compensation device, the group delay characteristic shown in FIG. 3 and the reflectance characteristic shown in FIG. 4 are obtained. In both graphs, the spectrum data used in design (designed) and the spectrum data that are obtained (realized) are shown.

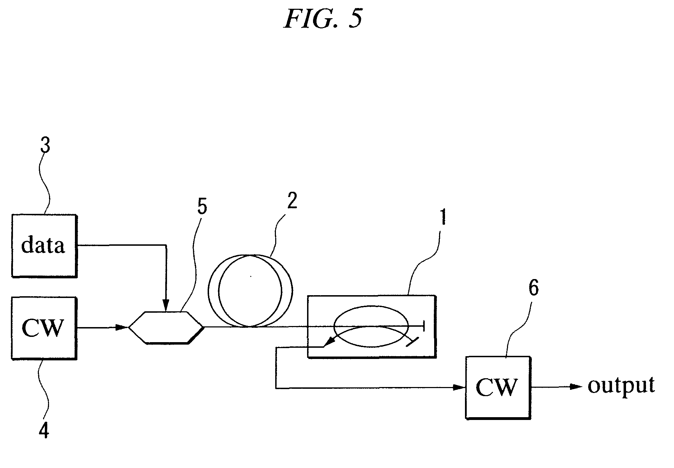

Next, for the distribution compensation device of this example, the effect of the dispersion compensation device is calculated using the evaluation system shown in FIG. 5. In FIG. 5, numeral 1 denotes the dispersion compensation device being evaluated, numeral 2 denotes the optical fiber to be compensated, numeral 3 denotes the input signal output portion, numeral 4 denotes the light source, numeral 5 denotes the modulator, and numeral 6 denotes the light detection portion. In this assessment system, an input signal is placed on a light signal through the modulator 5, that light signal is transmitted by the optical fiber 2 to be compensated, and it is inputted into the dispersion compensation device 1 after that, and finally the light signal outputted from the dispersion compensation device 1 is detected by the light detection portion 6, and outputted.

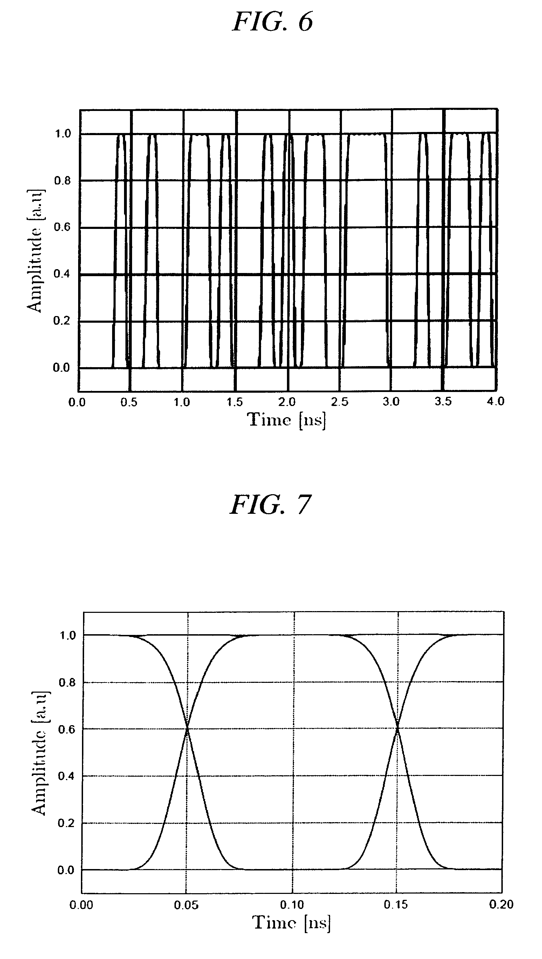

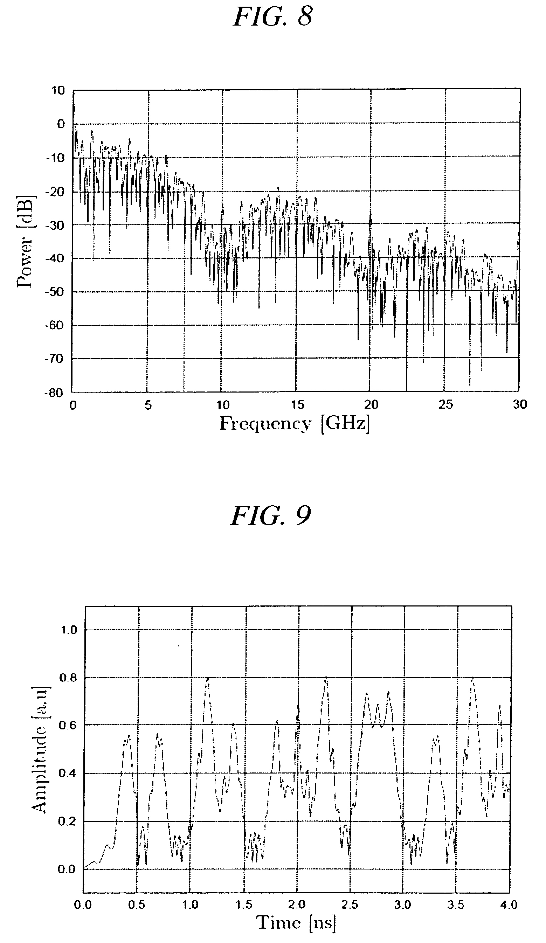

FIG. 6 shows the waveform of the nonreturn-to-zero (NRZ) initial pulse of 10 Gb/s that is obtained by this evaluation system. FIG. 7 similarly shows the eye pattern of the NRZ initial pulse of 10 Gb/s obtained by this evaluation system. FIG. 8 similarly shows the spectrum of the NRZ initial pulse of 10 Gb/s obtained by this evaluation system.

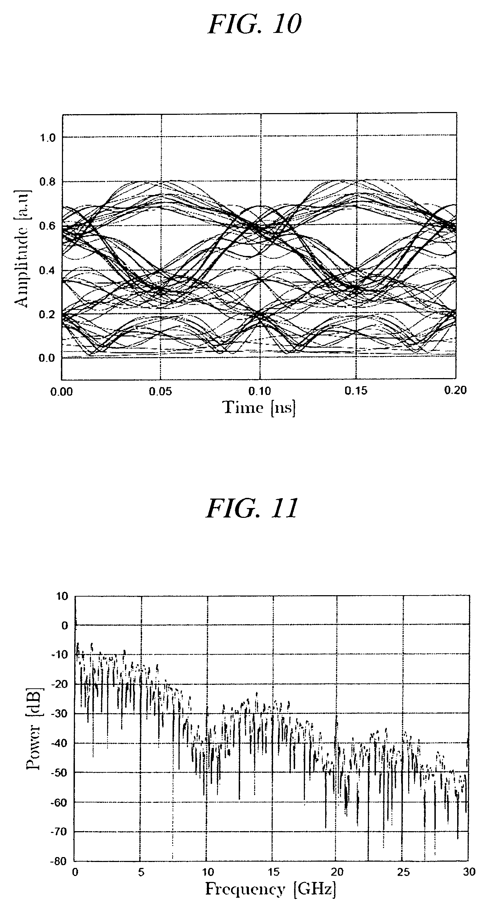

FIG. 9 shows the waveform of a channel in which the wavelength region is [1549.32 nm to 1550.12 nm] after passing through a S-SMF having a length of 100 km (assuming a transmission loss of 0.02 db/km, dispersion at wavelength 1550 nm of 17 ps/nm/km, and RDS of 0.0034 $nm^{-1}$). FIG. 10 shows the eye pattern of the channel with the abovementioned wavelength region, after similarly passing through a S-SMF having a length of 100 km. FIG. 11 shows the spectrum of the channel with the abovementioned wavelength region, after similarly passing through a S-SMF having a length of 100 km.

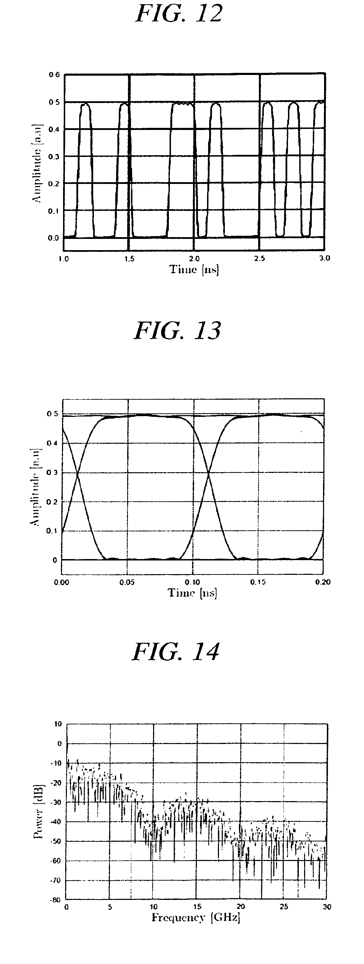

FIG. 12 shows the waveform after passing through the dispersion compensation device 1. FIG. 13 shows the eye pattern after similarly passing through the dispersion compensation device 1. FIG. 14 shows the spectrum after similarly passing through the dispersion compensation device 1. Note that the dispersion compensation device 1 here supposes one in which there are not transmission losses. As will be appreciated from comparing FIGS. 6 to 8, FIGS. 9 to 11, and FIGS. 12 to 14, respectively, if transmission losses of the dispersion compensation device 1 are disregarded, sufficiently good transmission characteristics are obtained.

However, a NPWG requires precise processes during manufacture. Also, in NPWG, transmission losses in the transmission route cannot be avoided due to material losses and the like. For that reason, dispersion compensation devices that are constituted using a NPWG often have large transmission losses. The transmission losses of an NPWG not only affect the amplitude characteristics of a dispersion compensation device, but also the desired group delay characteristic.

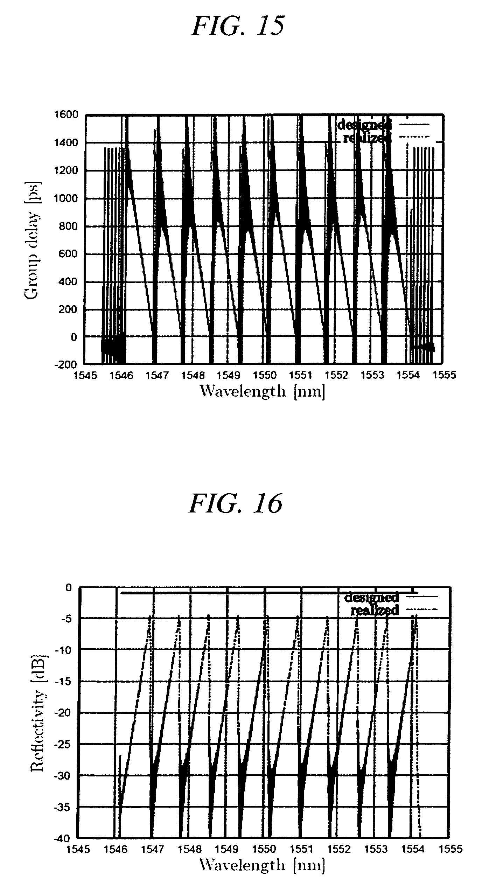

FIG. 15 shows the group delay characteristic in the case of presupposing a transmission loss of 10 dB in the one-way full length of a dispersion compensation device, and FIG. 16 shows the reflectance characteristic in the case of presupposing the same transmission loss of 10 dB.

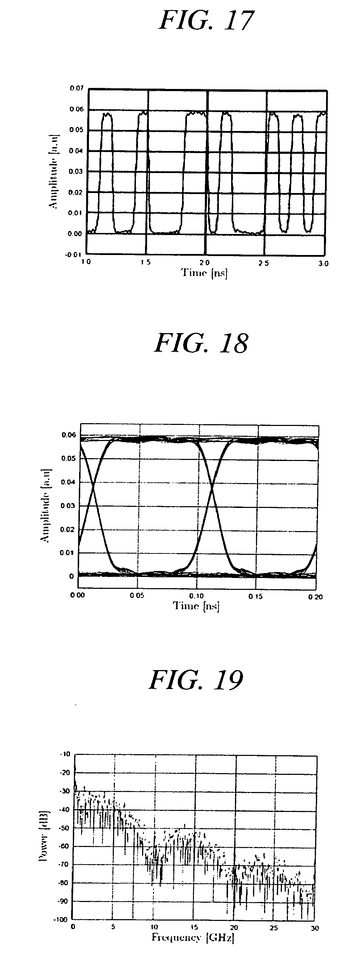

FIG. 17 shows the waveform of a pulse after passing through a dispersion compensation device in which the transmission loss is 10 dB. FIG. 18 shows the eye pattern after similarly passing through a dispersion compensation device in which the transmission loss is 10 dB. FIG. 19 shows the spectrum of a pulse after similarly passing through a dispersion compensation device in which the transmission loss is 10 dB. As shown by the eye pattern of FIG. 18, the incomplete compensation of the group delay affects the system characteristic.

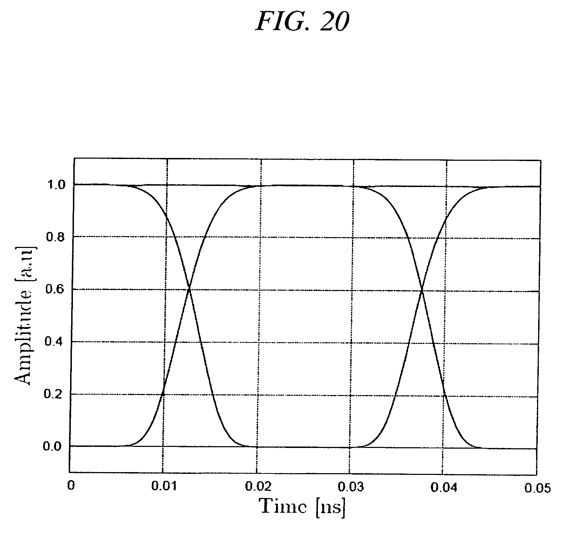

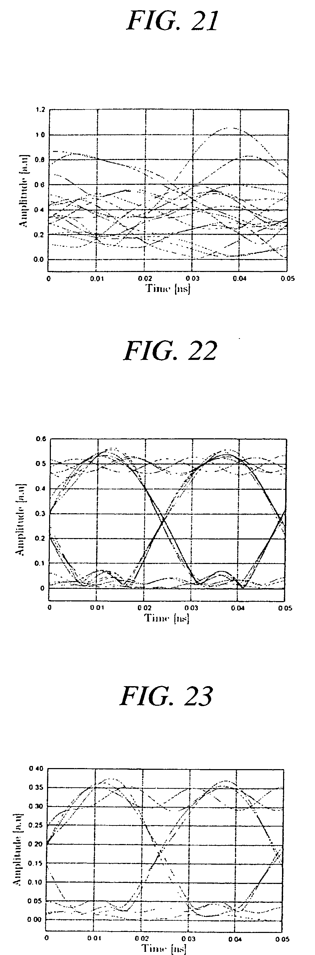

The affect of the transmission loss of a dispersion compensation device becomes still more remarkable if the transmission rate of a signal increases. FIG. 20 shows the eye pattern of a NRZ initial pulse of 40 Gb/s. FIG. 21 shows the eye pattern of a signal in the channel in which the wavelength region is [1549.32 nm to 1550.12 nm] after passing through a S-SMF having a length of 100 km.

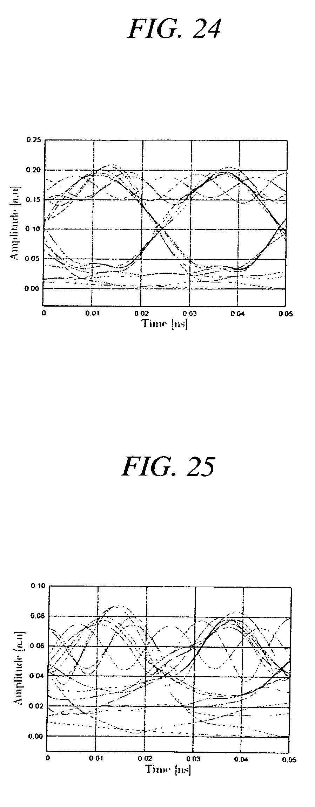

FIG. 22 shows the eye pattern of a 40 Gb/s pulse after passing through a dispersion compensation device that performs dispersion compensation of 10 channels of a S-SMF having a length of 100 km in the case of the transmission loss of the dispersion compensation device being none (0 dB). FIG. 23 shows the eye pattern in the case of the transmission loss of that dispersion compensation device being 2 dB. FIG. 24 shows the eye pattern in the case of the transmission loss of that dispersion compensation device being 5 dB. FIG. 25 shows the eye pattern in the case of the transmission loss of that dispersion compensation device being 10 dB. As shown in FIG. 21 to FIG. 25, as the transmission loss of the dispersion compensation device increases, the transmission characteristic worsens.

The present invention compensates the transmission loss of a dispersion compensation device when designing a dispersion compensation device that uses a NPWG in order to prevent the degradation of a transmission signal after dispersion compensation as described above due to the transmission loss of a NPWG of a dispersion compensation device. That is, the stages of design so as to lessen the wavelength dependency of the reflection coefficient, of the dispersion compensation device due to transmission losses of a NPWG shall be considered. Fluctuations from the desired characteristic of the group dependency characteristic that the dispersion compensation device that is designed in this way can realize are less compared to the case of not considering the transmission losses of the dispersion compensation device. As a result, it is possible to improve the characteristics of a transmission system that incorporates optical fiber.

The design procedure of the NPWG of this dispersion compensation device is as follows:

(a) Initially, set a first desired reflection spectrum ignoring transmission losses of the NPWG, and design the NPWG that can compensate wavelength dispersion of an optical fiber to be compensated. (b) next, derive a wavelength dependency characteristic of a transmission loss amount in this NPWG from an effective length of the NPWG designed in the process (a). (c) next, add a reverse dependency characteristic of the wavelength dependency characteristic of the transmission loss amount of the NPWG to the first reflection spectrum to correct a second reflection spectrum and redesign the equivalent refractive index distribution of the NPWG using this second reflection spectrum.

By doing so fluctuations of the group delay characteristic imparted by transmission losses are suppressed.

The design of the NPWG 10 of this dispersion compensation device employs the inverse scattering problem method that obtains the required width distribution from the desired reflection spectrum.

First, an electromagnetic field that propagates through the waveguide is formulated in the following manner (reference: J. E. Sipe, L. Poladian, and C. Martijn de Sterke, "Propagation through nonuniform grating structures," J. Opt. Soc. Am. A, vol. 11, no. 4, pp. 1307-1320, 1994). If the time fluctuation of the electromagnetic field is assumed to be exp(-iωt), from Maxwell's equations, an electromagnetic field that propagates through a NPWG 10 is expressed by Equations (1) and (2).

$$\frac{dE(z)}{dz} = i\omega\mu_0 H(z) \qquad \cdot\ \cdot\ \cdot\ (1)$$

$$\frac{dH(z)}{dz} = i\omega\varepsilon_0 n^2(z)E(z) \qquad \cdot\ \cdot\ \cdot\ (2)$$

Note that in the aforementioned Equations (1) and (2), E and H denote the complex amplitudes of the electric field and magnetic field, respectively, and n denotes the refractive index of a waveguide.

Here, the amplitude $A_+(z)$ of the electric power wave that propagates at the front of z, and the amplitude $A_-(z)$ of the electric power wave that propagates at the rear of z, which are respectively defined by the following Equations (3) and (4),

$$A_+(z) = \frac{1}{2}\left[\frac{n(z)}{n_0}\right]^{1/2}\left[E(z) + Z_0\frac{H(z)}{n(z)}\right] \qquad \cdot\ \cdot\ \cdot\ (3)$$

$$A_-(z) \; = \; \frac{1}{2}\left[\frac{n(z)}{n_0}\right]^{1/2}\left[E(z) - Z_0\frac{H(z)}{n(z)}\right] \quad \cdot \cdot \cdot \quad (4)$$

are introduced to the aforementioned Equation (1) and Equation (2), respectively. Note that $Z_0 = \sqrt{\mu_0/\varepsilon_0}$ denotes impedance in a vacuum, and no denotes the reference refractive index. From these variables, Equations (5) and (6) are derived:

$$\frac{dA_+(z)}{dz} \; = \; +i\frac{w}{c}n(z)A_+(z) + \frac{1}{2}\left(\frac{d\{\ln[n(z)]\}}{dz}\right)A_-(z) \quad \cdot \cdot \cdot \quad (5)$$

$$\frac{dA_-(z)}{dz} \; = \; -i\frac{w}{c}n(z)A_-(z) + \frac{1}{2}\left(\frac{d\{\ln[n(z)]\}}{dz}\right)A_+(z) \quad \cdot \cdot \cdot \quad (6)$$

Note that c expresses the velocity of light in a vacuum.
When a variable transformation is performed with Equation (7),

$$x = \frac{\omega_0}{2\pi c}\int_0^z n(s)ds, \;\; v_1 = A_-, \;\; v_2 = A_+, \;\; k = \frac{2\pi\omega}{\omega_0}, \;\; u(x) = -\frac{1}{2}\frac{d\{\ln[n(x)]\}}{dx}$$
$$\cdot \cdot \cdot \quad (7)$$

Equations (5) and (6) are reduced to Zakharov-Shabat equations respectively shown in the following Equations (8) and (9):

$$\frac{dv_1(x,k)}{dx} + ikv_1(x,k) \; = \; -u(x)v_2(x,k) \quad \cdot \cdot \cdot \quad (8)$$

$$\frac{dv_2(x,k)}{dx} - ikv_2(x,k) \; = \; -u(x)v_1(x,k) \quad \cdot \cdot \cdot \quad (9)$$

Note that $\omega_0$ denotes the reference angular frequency.
These Zakharov-Shabat equations can be solved as inverse scattering problems. That is, from the spectrum data of the reflection coefficient defined by the following Equation (10),

$$r(k) = \lim_{x\to-\infty}\left[\frac{v_1(x,k)}{v_2(x,k)}\right]\exp(2ikx) \quad \cdot \cdot \cdot \quad (10)$$

it is possible to numerically solve the potential function u(x) (reference: P. V. Frangos and D. L. Jaggard, "A numerical solution to the Zakharov-Shabat inverse scattering problem," IEEE Trans. Antennas and Propag., vol. 39, no. 1, pp. 74-79, 1991).
This is applied to the design of the dispersion compensation device according to the present invention. First, a first desired reflection spectrum in the case of ignoring transmission losses of the waveguide is specified, and the potential of the waveguide is derived by the aforementioned method. Here, the reflection spectrum signifies the complex reflection data that is obtained from the group delay amount with respect to the wavelength and the reflectivity.
If the potential u(x) is obtained, the local equivalent refractive index n(x) is found as shown by the following Equation (11).

$$n(x) = n(0)\exp\left[-2\int_0^x u(s)ds\right] \quad \cdot \cdot \cdot \quad (11)$$

Furthermore, the core width w (x) at a predetermined position in the light propagation direction is found from the relationship between the thickness of the core of the waveguide that is to be actually fabricated and the equivalent refractive index with respect to the width of the core, which is found from the core refractive index and the cladding refractive index.

Next, the wavelength dependency of the transmission loss amount of this NPWG 10 is derived from the effective length of the NPWG 10 that is designed in this way.

As for the wavelength dependency of the transmission loss amount, for example, first specifies the loss amount per unit length of a waveguide by measurement etc. When the information of the loss amount is reflected in the refractive index n(z) in the Equations (5) and (6), it is possible to derive the transmission loss. In this case, since lights of different wavelengths are reflected at different positions, even if the wavelength dependency becomes smaller for the loss amount per unit length of the waveguide, a large wavelength dependency arises for the transmission loss amount of the light that is reflected from the waveguide.

Next, a reverse dependency characteristic of the wavelength dependency characteristic that is found above is added to the first reflection spectrum used above to correct it and produce the second reflection spectrum. Then, if the core width w(x) is found using this second reflection spectrum, similarly to use the first reflection spectrum, the NPWG 10 that is used by the diffusion compensation device of the present invention is designed.

By the above processes, it is possible to design the desired reflection-type wavelength dispersion compensation device by the reflection characteristic that includes the transmission loss that unavoidably exists in an actual waveguide.

If this method is used, the interference between channels that occurs in the method of superimposing FBGs (for example, refer to Patent Document 4) no longer occurs due to the consideration given to the design method. Also, the NPWG 10 that is obtained by this design has a construction that differs from the one disclosed in Patent Document 4.

The NPWG 10 that is the main constituent element of the dispersion compensation device 20 of the present invention is, for example, manufactured in the following way.

First, a lower cladding layer of the NPWG 10 is provided. Next, a core layer with a refractive index that is greater than this lower cladding layer is provided on the lower cladding layer. Next, the core 11 is formed by applying a processing that, in the core layer, leaves a predetermined core shape designed so that the equivalent refractive index of the core changes unevenly along the light propagation direction (designed in processes (a) to (c) above) and removes the other portions. Next, an upper cladding layer is provided so as to cover the core 11, and the NPWG 10 is manufactured.

In this way, when forming the core 11 of the NPWG 10, it is preferable to use a mask that has the shape of the aforementioned core width w(x) (that is designed so the equivalent refractive index of the core 10 changes unevenly along the light propagation direction) and form the core 11 by a photolithography method. The materials and procedures that are used in this photolithography method can be implemented using materials and procedures that are used in a photolithography method that is well-known in the semiconductor manufacturing field. Also, the film formation method of the cladding layer and the core layer can be implemented using a well-known film formation technique that is used in ordinary optical waveguide fabrication.

In the dispersion compensation device 20 of the present invention, after manufacturing the NPWG 10 as described above, the transmitting end 14 of this NPWG 10 is terminated with the nonreflecting terminal 16. Moreover, the circulator 15 or a directional coupler is connected to the reflecting end 13 of the NPWG10. Thereby, the dispersion compensation device 20 shown in FIG. 28 is obtained.

The NPWG 10 of this dispersion compensation device 20 has the reflection rate characteristics that can compensate the wavelength dispersion of an optical fiber to be compensated, as mentioned above. For that reason, when the light signal that is outputted from the optical fiber to be compensated is reflected by the NPWG 10, the wavelength dispersion of that light signal is compensated and outputted. Then, the light signal that was outputted from the dispersion compensation device 20 is inputted into the optical fiber on the downstream side that is connected to the output side of the circulator 15, and propagates through this fiber.

In the embodiment, as shown in FIG. 1, the NPWG 10 is illustrated with a structure in which the core 11 is embedded in the cladding 12 with a height (thickness) that is constant, and a width that changes unevenly along the longitudinal direction. The optical waveguide that is used in the present invention is not limited only to this illustration, and various changes are possible.

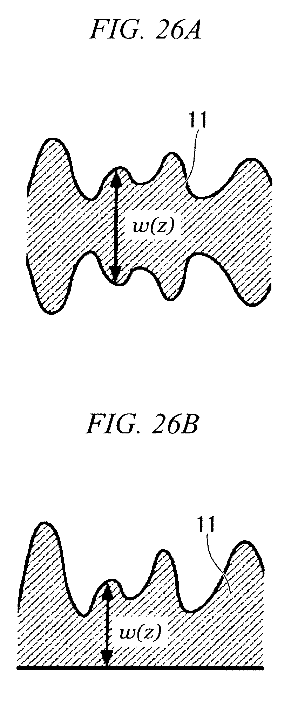

For example, as shown in FIG. 26A, a structure is possible in which the width distribution of the core 11 is unevenly distributed along the light propagation direction so that both sides in the width direction are symmetrical from the center of the core 11. Moreover, as shown in FIG. 26B, a structure is possible in which the width distribution of the core 11 is unevenly distributed along the light propagation direction so that both sides in the width direction may be asymmetrical from the center of the core 11.

Also, besides the structure that provides the core 11 in a linear manner along the longitudinal direction (z) of the NPWG 10 as shown in FIG. 1, there may also be a structure that provides the core 11 in a meandering shape as shown in FIG. 27.

By making a structure that provides the core 11 in a meandering shape in this way, further miniaturization of the NPWG 10 becomes possible.

[Examples]

<Example 1>

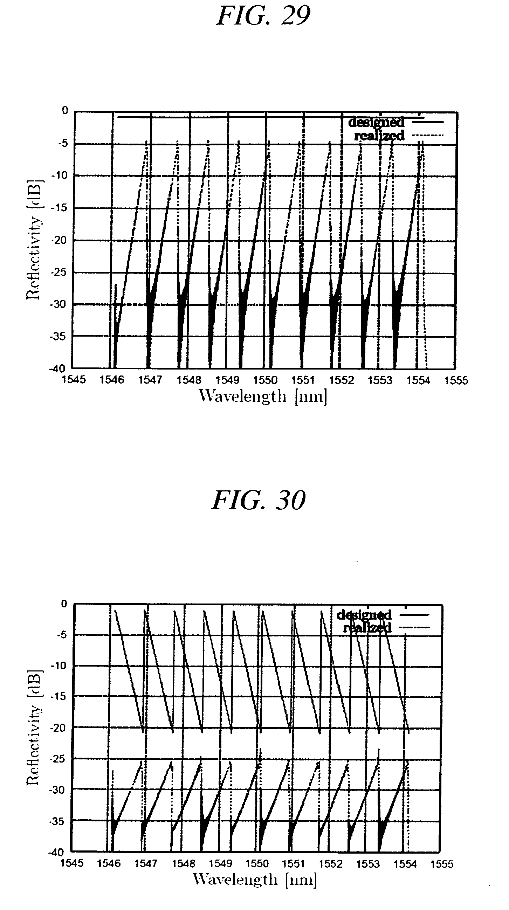

A dispersion compensation device was designed that realizes compensation of wavelength dispersion in which the dispersion amount D = -1,700 ps/nm, and the relative dispersion slope RDS = 0.0034 $nm^{-1}$ in the wavelength region [1546.12 nm to 1554.13 nm]. In this case, the NPWG was designed so that the wavelength region that is dispersion compensated is divided into 10 channels in which the frequency f satisfies 193.4 + 0.1 nTHz $\leq$ f $\leq$ 193.5 + 0.1 nTHz. Here, n expresses an integer that satisfies -5 $\leq$ n $\leq$ 4. In this dispersion compensation device, dispersion compensation is performed in each channel. In this case, a wavelength dependency arises such that as the wavelength in each channel becomes shorter, the loss increases, as shown in FIG. 29 described below. For that reason, in this example, in order to be able to reduce this wavelength dependency, the wavelength dependency such that the loss increases as the wavelength becomes longer in each channel is added to the design spectrum of the NPWG. In doing so, it is designed so that the maximum loss differential becomes 20 dB. Each of these channels satisfies the ITU grid interval. The dispersion compensation device of this example can compensate residual dispersion of a S-SMF having a length of 100 km.

<Comparative Example 1>

A dispersion compensation device was manufactured that is similar to Example 1 other than being designed ignoring transmission losses (the wavelength dependency such that the loss increases as the wavelength increases in each channel not being added to the NPWG design spectrum).

FIG. 29 relates to the dispersion compensation device of Comparative Example 1 designed ignoring transmission losses, and shows the reflectance characteristic in the case of the transmission loss of the one-way total length of the dispersion compensation device actually being 10 dB. As shown in FIG. 29, a wavelength dependency arises in which as the wavelength in each channel becomes shorter, the loss increases.

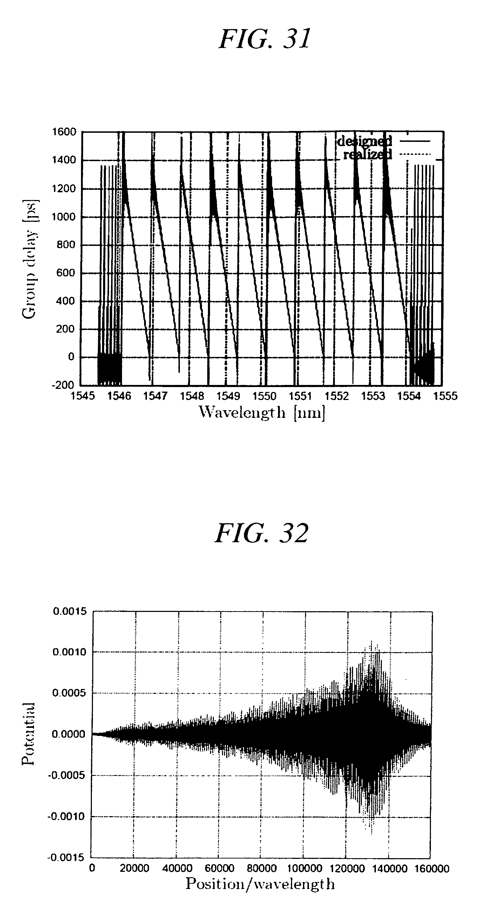

FIG. 30 shows the reflectance characteristic of Example 1 (designed). Also, in FIG. 30, the reflectance characteristic (realized) in the case of the transmission loss of the dispersion compensation device of Example 1 becoming 10 dB is shown simultaneously. FIG. 31 shows the group delay characteristic of that case.

FIG. 32 shows the potential distribution of the NPWG obtained by the design of Example 1. In the graph, the fluctuation of the potential at the entrance of the compensation device (left side in the drawing) is small on average, and a signal reflected in the vicinity of the entrance, that is, a long-wavelength signal is slightly reflected in the channel. On the other hand, the potential fluctuates comparatively wildly at the inner part of the dispersion compensation device (right side in the drawing), and a signal reflected at a place far from the entrance, that is, a short-wavelength signal is greatly reflected in the channel. In fact, since there is a transmission loss in a NPWG of a dispersion compensation device, the overall wavelength dependency of the reflectivity of the signal is flattened by the design. The core width of a NPWG that is designed based on the potential distribution of FIG. 32 has a distribution shape in which width fluctuations gradually increase from one end side in the light propagation direction of the NPWG (entrance side) toward the other end side, and having a fluctuation maximal portion in the vicinity of the other end side.

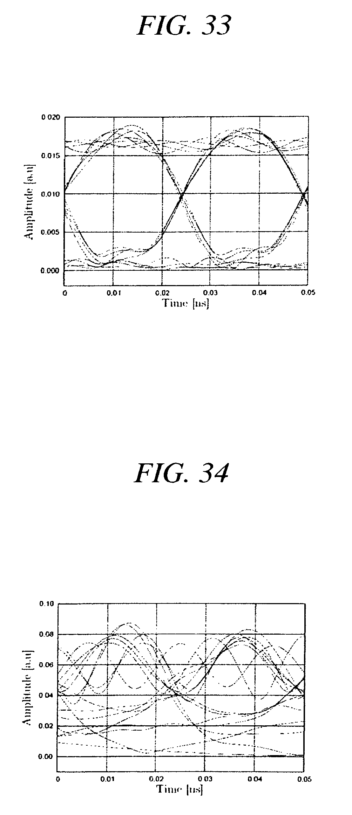

FIG 33 shows the eye pattern of a 40 Gb/s NRZ pulse after performing dispersion compensation with the dispersion compensation device of Example 1 on a signal in a channel with a wavelength region of [1549.32 nm to 1550.12 nm] that has passed through a S-SMF with a length of 100 km. FIG. 34 shows the eye pattern of a 40 Gb/s NRZ pulse after passing through the dispersion compensation device of Comparative Example 1 that does not compensate the transmission loss. Compared with the Comparative Example 1 that does not compensate the transmission loss (FIG. 34), in the Example 1 that compensates the transmission loss (FIG. 33), the transmission characteristic significantly improved.

<Example 2>

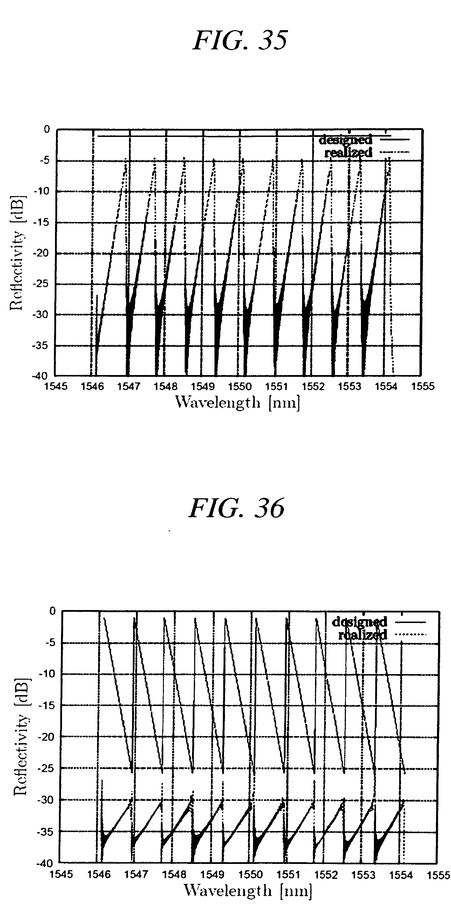

A dispersion compensation device was designed that realizes compensation of wavelength dispersion in which the dispersion amount D = -1,700 ps/nm, and the relative dispersion slope RDS = 0.0034 $nm^{-1}$ in the wavelength region [1546.12 nm to 1554.13 nm]. In this case, the NPWG was designed so that the wavelength region that is dispersion compensated is divided into 10 channels in which the frequency f satisfies 193.4 + 0.1 nTHz $\leq$ f $\leq$ 193.5 + 0.1 nTHz. Here, n expresses an integer that satisfies -5 $\leq$ n $\leq$ 4. In this dispersion compensation device, dispersion compensation is performed in each channel. In this case, a wavelength dependency arises such that as the wavelength in each channel becomes shorter, the loss increases, as shown in FIG. 35 described below. For that reason, in this example, in order to be able to reduce this wavelength dependency, the wavelength dependency such that the loss increases as the wavelength becomes longer in each channel is added to the design spectrum of the NPWG. In doing so, it is designed so that the maximum loss differential becomes 25 dB. Each of these channels satisfies the ITU grid interval. The dispersion compensation device of this example can compensate residual dispersion of a S-SMF having a length of 100 km.

<Comparative Example 2>

A dispersion compensation device was manufactured that is similar to Example 2 other than being designed ignoring transmission losses (the wavelength dependency such that the loss increases as the wavelength increases in each channel not being added to the NPWG design spectrum).

FIG. 35 relates to the dispersion compensation device of Comparative Example 2 designed ignoring transmission losses, and shows the reflectance characteristic in the case of the transmission loss of the one-way total length of the dispersion compensation device actually being 10 dB. As shown in FIG. 35, a wavelength dependency arises in which as the wavelength in each channel becomes shorter, the loss increases.

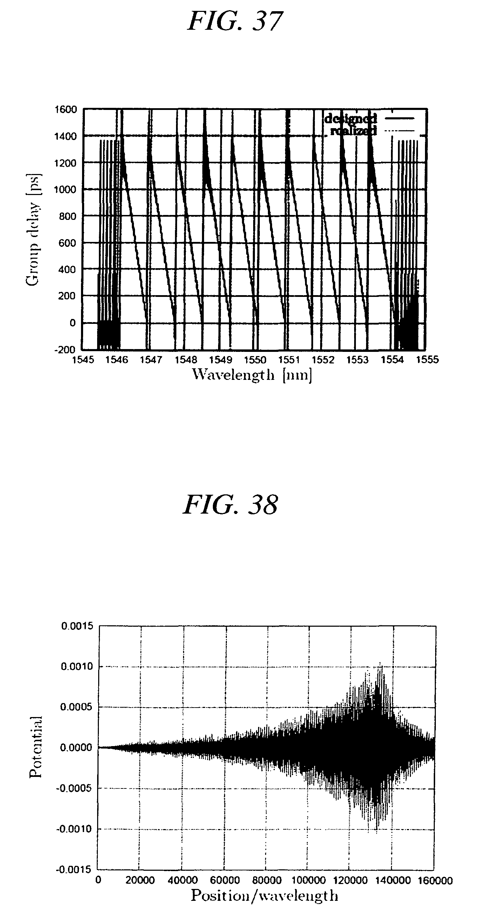

FIG. 36 shows the reflectance characteristic of Example 2 (designed). Also, in FIG. 36, the reflectance characteristic (realized) in the case of the transmission loss of the dispersion compensation device of Example 2 becoming 10 dB is shown simultaneously. FIG. 37 shows the group delay characteristic of that case.

FIG. 38 shows the potential distribution obtained by the design of Example 2. In the graph, the fluctuation of the potential at the entrance of the device (left side in the drawing) is small on average, and a signal reflected in the vicinity of the entrance, that is, a long-wavelength signal is slightly reflected in the channel. On the other hand, the potential fluctuates comparatively wildly at the inner part of the device (right side in the drawing), and a signal reflected at a place far from the entrance, that is, a short-wavelength signal is greatly reflected in the channel. In fact, since there is a transmission loss in a waveguide of a device, the overall wavelength dependency of the reflectivity of the signal is flattened by the design. The core width of a NPWG that is designed based on the potential distribution of FIG. 38 has a distribution shape in which the width fluctuation gradually increases from one end side in the light propagation direction of the NPWG (entrance side) toward the other end side, and has a fluctuation maximal portion in the vicinity of the other end side.

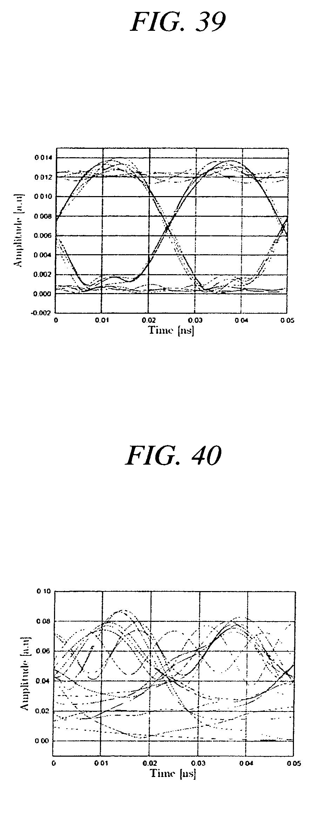

FIG. 39 shows the eye pattern of a 40 Gb/s NRZ pulse after performing dispersion compensation with the dispersion compensation device of Example 2 on a signal in a channel with a wavelength region of [1549.32 nm to 1550.12 nm] that has passed through a S-SMF with a length of 100 km. FIG. 40 shows the eye pattern of a 40 Gb/s NRZ pulse after passing through the dispersion compensation device of Comparative Example 2 that does not compensate the transmission loss. Compared with the Comparative Example 2 that does not compensate the transmission loss (FIG. 40), in the Example2 that compensates the transmission loss (FIG. 39), the transmission characteristic significantly improved.

<Example 3>

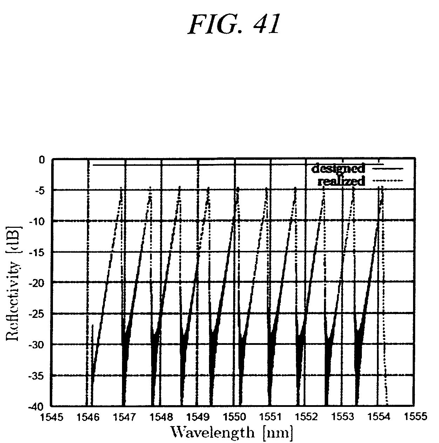

A dispersion compensation device was designed that realizes compensation of wavelength dispersion in which the dispersion amount D = -1,700 ps/nm, and the relative dispersion slope RDS = 0.0034 nm$^{-1}$ in the wavelength region [1546.12 nm to 1554.13 nm]. In this case, the NPWG was designed so that the wavelength region that is dispersion compensated is divided into 10 channels in which the frequency f satisfies $193.4 + 0.1 \, n \, \text{THz} \leq f \leq 193.5 + 0.1 \, n \, \text{THz}$. Here, n expresses an integer that satisfies $-5 \leq n \leq 4$. In this dispersion compensation device, dispersion compensation is performed in each channel. In this case, a wavelength dependency arises such that as the wavelength in each channel becomes shorter, the loss increases, as shown in FIG 41 described below. For that reason, in this example, in order to be able to reduce this wavelength dependency, the wavelength dependency such that the loss increases as the wavelength becomes longer in each channel is added to the design spectrum of the NPWG, In doing so, it is designed so that the maximum loss differential becomes 30 dB. Each of these channels satisfies the ITU grid interval. The dispersion compensation device of this example can compensate residual dispersion of a S-SMF having a length of 100 km.

<Comparative Example 3>

A dispersion compensation device was manufactured that is similar to Example 3 other than being designed ignoring transmission losses (the wavelength dependency such that the loss increases as the wavelength increases in each channel not being added to the NPWG design spectrum).

FIG. 41 relates to the dispersion compensation device of Comparative Example 3 designed ignoring transmission losses, and shows the reflectance characteristic in the case of the transmission loss of the one-way total length of the dispersion compensation device actually being 10 dB. As shown in FIG. 41, a wavelength dependency arises in which as the wavelength in each channel becomes shorter, the loss increases.

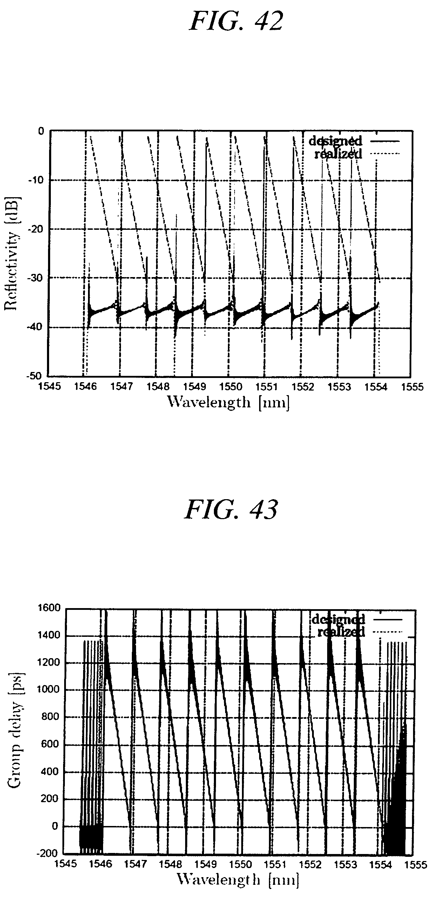

FIG. 42 shows the reflectance characteristic of Example 3 (designed). Also, in FIG. 42, the reflectance characteristic (realized) in the case of the transmission loss of the dispersion compensation device of Example 3 becoming 10 dB is shown simultaneously. FIG. 43 shows the group delay characteristic of that case.

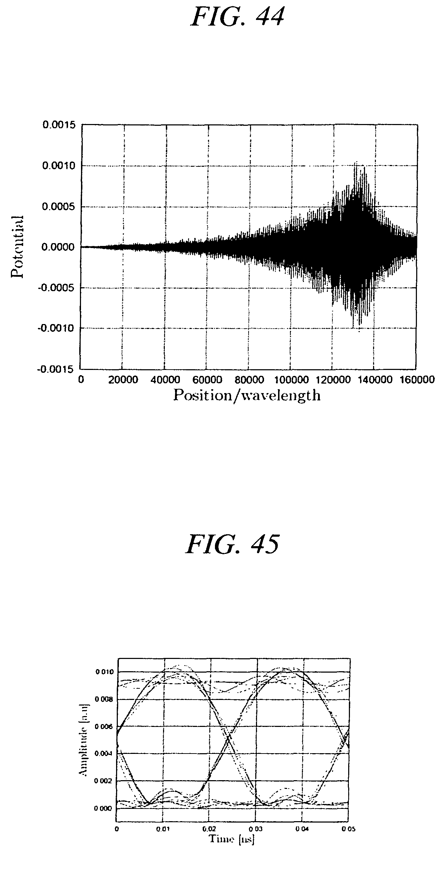

FIG. 44 shows the potential distribution obtained by the design of Example 3. In the graph, the fluctuation of the potential at the entrance of the device (left side in the drawing) is small on average, and a signal reflected in the vicinity of the entrance, that is, a long-wavelength signal is slightly reflected in the channel. On the other hand, the potential fluctuates comparatively wildly at the inner part of the device (right side in the drawing), and a signal reflected at a place far from the entrance, that is, a short-wavelength signal is greatly reflected in the channel. In fact, since there is a transmission loss in a waveguide of a device, the overall wavelength dependency of the reflectivity of the signal is flattened by the design. The core width of a NPWG that is designed based on the potential distribution of FIG. 44 has a distribution shape in which the width fluctuation gradually increases from one end side in the light propagation direction of the NPWG (entrance side) toward the other end side, and has a fluctuation maximal portion in the vicinity of the other end side.

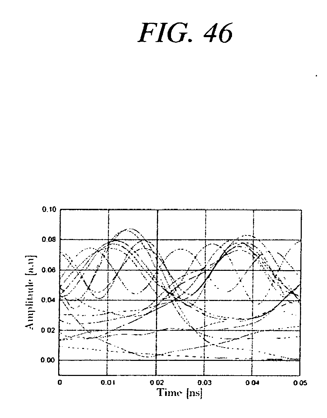

FIG. 45 shows the eye pattern of a 40 Gb/s NRZ pulse after performing dispersion compensation with the device of Example 3 on a signal in a channel with a wavelength region of [1549.32 nm to 1550.12 nm] that has passed through a S-SMF with a length of 100 km. FIG. 46 shows the eye pattern of a 40 Gb/s NRZ pulse after passing through the dispersion compensation device of Comparative Example 3 that does not compensate the transmission loss.

Compared with the Comparative Example 3 that does not compensate the transmission loss (FIG. 46), in the Example 3 that compensates the transmission loss (FIG. 45), the transmission characteristic significantly improved.

<Example 4>

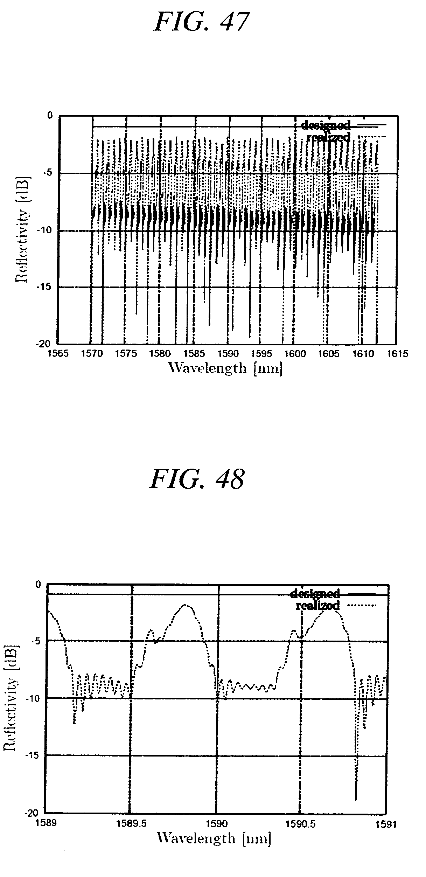

A dispersion compensation device was designed that realizes compensation of wavelength dispersion in which the dispersion amount D = -950 ps/nm, and the relative dispersion slope RDS = 0.003 $nm^{-1}$ in the wavelength region [1570.01 nm to 1612.22 nm]. In this case, the NPWG was designed so that the wavelength region that is dispersion compensated is divided into 50 channels in which the frequency f satisfies $188.45 + 0.1$ nTHz $\leq f \leq 188.55 + 0.1$ nTHz. Here, n expresses an integer that satisfies $-25 \leq n \leq 24$. In this dispersion compensation device, dispersion compensation is performed in each channel. In this case, a wavelength dependency arises such that as the wavelength in each channel becomes shorter, the loss increases, as shown in FIGS. 47 and 48 described below. For that reason, in this example, in order to be able to reduce this wavelength dependency, the wavelength dependency such that the loss increases as the wavelength becomes longer in each channel is added to the design spectrum of the NPWG, In doing so, it is designed so that the maximum loss differential becomes 5 dB. Each of these channels satisfies the ITU grid interval. The dispersion compensation device of this example can compensate residual dispersion of a S-SMF having a length of 100 km.

<Comparative Example 4>

A dispersion compensation device was manufactured that is similar to Example 4 other than being designed ignoring transmission losses (the wavelength dependency such that the loss increases as the wavelength increases in each channel not being added to the NPWG design spectrum).

Here, it is assumed there is a transmission loss of 2 dB over the entire one-way length in the waveguide of the dispersion compensation device.

FIG. 47 relates to the dispersion compensation device of Comparative Example 4 designed ignoring transmission losses, and shows the reflectance characteristic in the case of the transmission loss of the dispersion compensation device actually being 10 dB. FIG. 48 is a partial magnified view of FIG. 47. As shown in FIG. 47 and FIG. 48, a wavelength dependency arises in which as the wavelength in each channel becomes shorter, the loss increases.

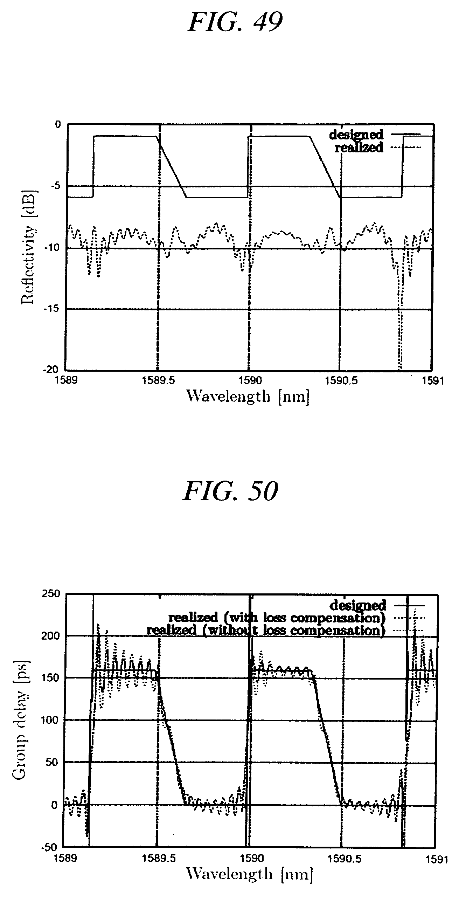

FIG 49 shows the reflectance characteristic of Example 4 (designed). Also, in FIG. 49, the reflectance characteristic (realized) in the case of the transmission loss of the device becoming 2 dB is shown simultaneously.

FIG. 50 shows the group delay characteristic of that case. In the drawing, the characteristic of Example 4 in which loss compensation is performed (realized (with loss compensation)) and the characteristic of Comparative Example 4 in which loss compensation is not performed (realized (without loss compensation)) are compared. From FIG. 50, in Example 4 in which loss compensation is performed, a characteristic that is closer to the desired characteristic (designed) is obtained.

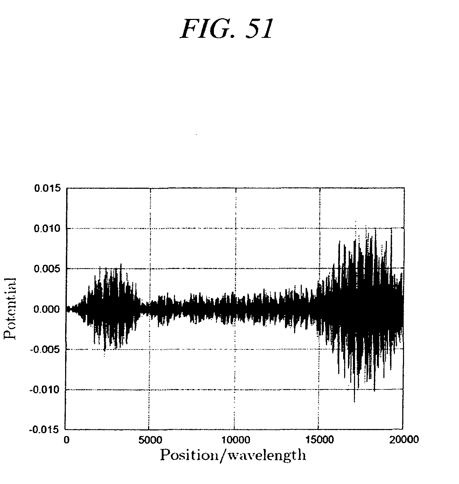

FIG. 51 shows the potential distribution obtained by the design of Example 4. In the graph, the fluctuation of the potential at the entrance of the dispersion compensation device (left side in the drawing) is small on average, and a signal reflected in the vicinity of the entrance, that is, a long-wavelength signal is slightly reflected in the channel. On the other hand, the potential fluctuates comparatively wildly at the inner part of the dispersion compensation device (right side in the drawing), and a signal reflected at a place far from the entrance, that is, a short-wavelength signal is greatly reflected in the channel. In fact, since there is a transmission loss in a NPWG of a dispersion compensation device, the overall wavelength dependency of the reflectivity of the signal is flattened by the design. The core width of a NPWG that is designed based on the potential distribution of FIG. 51 has a distribution shape having a center portion in which the width fluctuations are small from one end side in the light propagation direction of the NPWG (entrance side) toward the other end side, a first fluctuation portion on one side in which the width fluctuations are greater than the center portion, and a fluctuation maximal portion on the other end side in which the width fluctuations are greater than the first fluctuation portion.

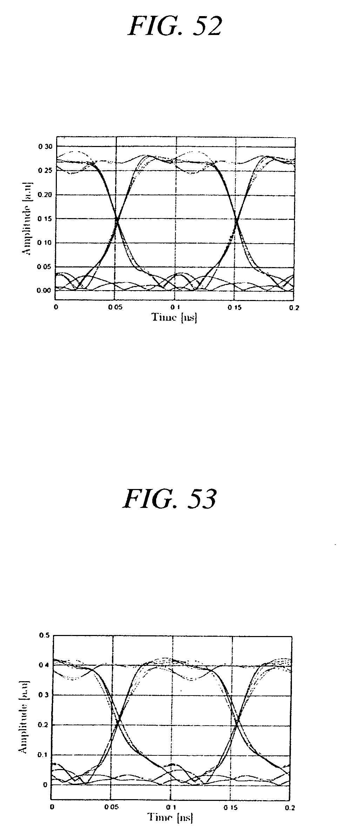

FIG. 52 shows the eye pattern of a 10 Gb/s NRZ pulse after performing dispersion compensation with the dispersion compensation device of Example 4 on a signal in a channel with a wavelength region of [1589.99 nm to 1590.83 nm] that has passed through a S-SMF with a length of 50 km. FIG. 53 shows the eye pattern of a 10 Gb/s NRZ pulse after passing through the dispersion compensation device of Comparative Example 4 that does not compensate the transmission loss. Compared with the Comparative Example 4 that does not compensate the transmission loss (FIG. 53), in the Example 4 that compensates the transmission loss (FIG. 52), the transmission characteristic significantly improved.

<Example 5>

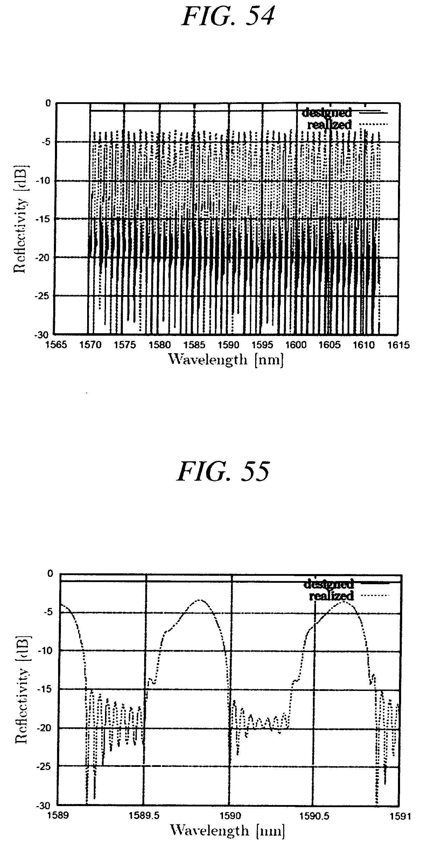

A dispersion compensation device was designed that realizes compensation of wavelength dispersion in which the dispersion amount D = -950 ps/nm, and the relative dispersion slope RDS = 0.003 nm$^{-1}$ in the wavelength region [1570.01 nm to 1612.22 nm]. In this case, the NPWG was designed so that the wavelength region that is dispersion compensated is divided into 50 channels in which the frequency f satisfies $188.45 + 0.1$ nTHz $\leq f \leq 188.55 + 0.1$ nTHz. Here, n expresses an integer that satisfies $-25 \leq n \leq 24$. In this dispersion compensation device, dispersion compensation is performed in each channel. In this case, a wavelength dependency arises such that as the wavelength in each channel becomes shorter, the loss increases, as shown in FIGS. 54 and 55 described below. For that reason, in this example, in order to be able to reduce this wavelength dependency, the wavelength dependency such that the loss increases as the wavelength becomes longer in each channel is added to the design spectrum of the NPWG. In doing so, it is designed so that the maximum loss differential becomes 12 dB. Each of these channels satisfies the ITU grid interval. The dispersion compensation device of this example can compensate residual dispersion of a S-SMF having a length of 100 km.

<Comparative Example 5>

A dispersion compensation device was manufactured that is similar to Example 5 other than being designed ignoring transmission losses (the wavelength dependency such that the loss increases as the wavelength increases in each channel not being added to the NPWG design spectrum).

Here, it is assumed there is a transmission loss of 5 dB over the entire one-way length in the NPWG of the dispersion compensation device. FIG. 54 relates to the dispersion compensation device of Comparative Example 5 designed ignoring transmission losses, and shows the reflectance characteristic in the case of the transmission loss actually being 2 dB. FIG. 55 is a partial magnified view of FIG. 54. As shown in FIG. 54 and FIG. 55, a wavelength dependency arises in which as the wavelength in each channel becomes shorter, the loss increases.

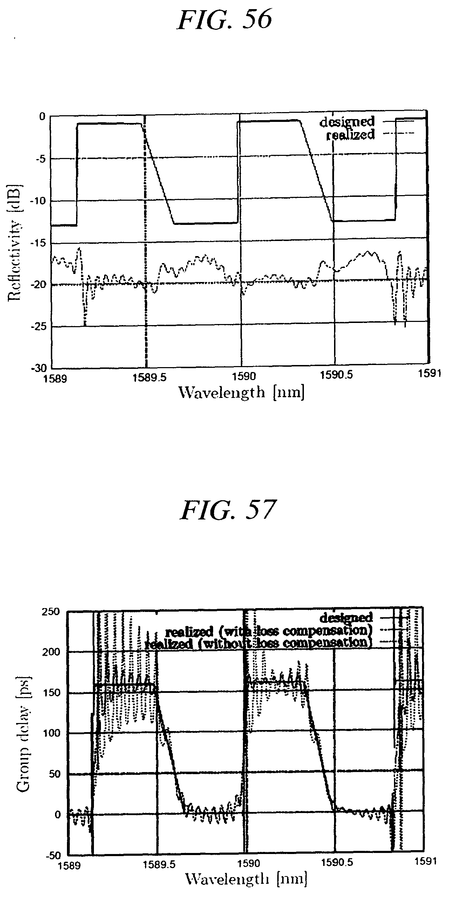

FIG. 56 shows the reflectance characteristic of Example 5 (designed). Also, in FIG. 56, the reflectance characteristic (realized) in the case of the transmission loss of the dispersion compensation device of Example 5 becoming 5 dB is shown simultaneously.

FIG. 57 shows the group delay characteristic of that case. In the drawing, the characteristic of Example 5 in which loss compensation is performed (realized (with loss compensation)) and the characteristic of Comparative Example 5 in which loss compensation is not performed (realized (without loss compensation)) are compared. From FIG. 57, in Example 5 in which loss compensation is performed, a characteristic that is closer to the desired characteristic (designed) is obtained.

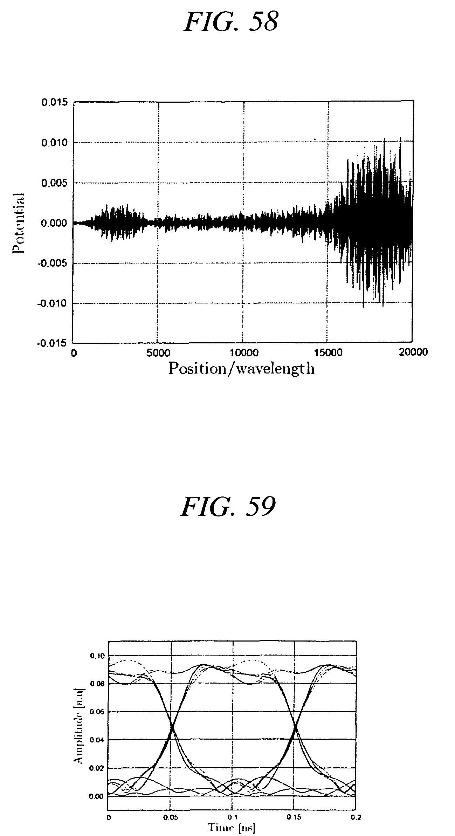

FIG. 58 shows the potential distribution obtained by the design of Example 5. In the graph, the fluctuation of the potential at the entrance of the device (left side in the drawing) is small on average, and a signal reflected in the vicinity of the entrance, that is, a long-wavelength signal is slightly reflected in the channel. On the other hand, the potential fluctuates comparatively wildly at the inner part of the device (right side in the drawing), and a signal reflected at a place far from the entrance, that is, a short-wavelength signal is greatly reflected in the channel. In fact, since there is a transmission loss in a waveguide of a device, the overall wavelength dependency of the reflectivity of the signal is flattened by the design. The core width of a NPWG that is designed based on the potential distribution of FIG. 58 has a distribution shape having a center portion in which the width fluctuations are small from one end side in the light propagation direction of the NPWG (entrance side) toward the other end side, a first fluctuation portion on one side in which the width fluctuations are greater than the center portion, and a fluctuation maximal portion on the other end side in which the width fluctuations are greater than the first fluctuation portion.

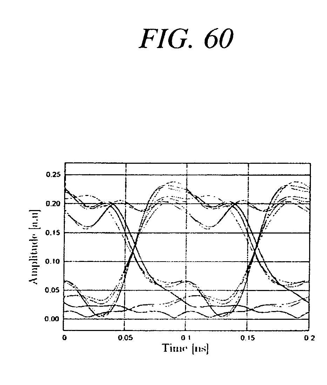

FIG 59 shows the eye pattern of a 10 Gb/s NRZ pulse after performing dispersion compensation with the dispersion compensation device of Example 4 on a signal in a channel with a wavelength region of [1589.99 nm to 1590.83 nm] that has passed through a S-SMF with a length of 50 km. FIG. 60 shows the eye pattern of a 10 Gb/s NRZ pulse after passing through the dispersion compensation device of Comparative Example 5 that does not compensate the transmission loss. Compared with the Comparative Example 5 that does not compensate the transmission loss (FIG. 60), in the Example 5 that compensates the transmission loss (FIG. 59), the transmission characteristic significantly improved.

<Example 6>

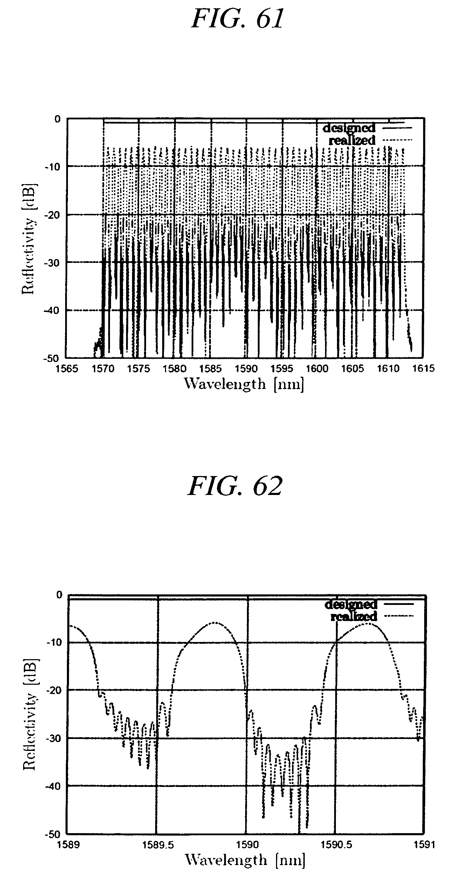

A dispersion compensation device was designed that realizes compensation of wavelength dispersion in which the dispersion amount D = -950 ps/nm, and the relative dispersion slope RDS = 0.003 nm$^{-1}$ in the wavelength region [1570.01 nm to 1612.22 nm]. In this case, the NPWG was designed so that the wavelength region that is dispersion compensated is divided into 50 channels in which the frequency f satisfies $188.45 + 0.1$ nTHz $\leq f \leq 188.55 + 0.1$ nTHz. Here, n expresses an integer that satisfies $-25 \leq n \leq 24$. In this dispersion compensation device, dispersion compensation is performed in each channel. In this case, a wavelength dependency arises such that as the wavelength in each channel becomes shorter, the loss increases, as shown in FIGS. 61 and 62 described below. For that reason, in this example, in order to be able to reduce this wavelength dependency, the wavelength dependency such that the loss increases as the wavelength becomes longer in each channel is added to the design spectrum of the NPWG. In doing so, it is designed so that the maximum loss differential becomes 25 dB. Each of these channels satisfies the ITU grid interval. The dispersion compensation device of thie example can compensate residual dispersion of a S-SMF having a length of 100 km.

<Comparative Example 6>

A dispersion compensation device was manufactured that is similar to Example 6 other than being designed ignoring transmission losses (the wavelength dependency such that the loss increases as the wavelength increases in each channel not being added to the NPWG design spectrum).

Here, it is assumed there is a transmission loss of 10 dB over the entire one-way length in the NPWG of the dispersion compensation device. FIG. 61 relates to the dispersion compensation device of Comparative Example 6 designed ignoring transmission losses, and shows the reflectance characteristic in the case of the transmission loss actually being 2 dB. FIG. 62 is a partial magnified view of FIG. 61. As shown in FIG. 61 and FIG. 62, a wavelength dependency arises in which as the wavelength in each channel becomes shorter, the loss increases.

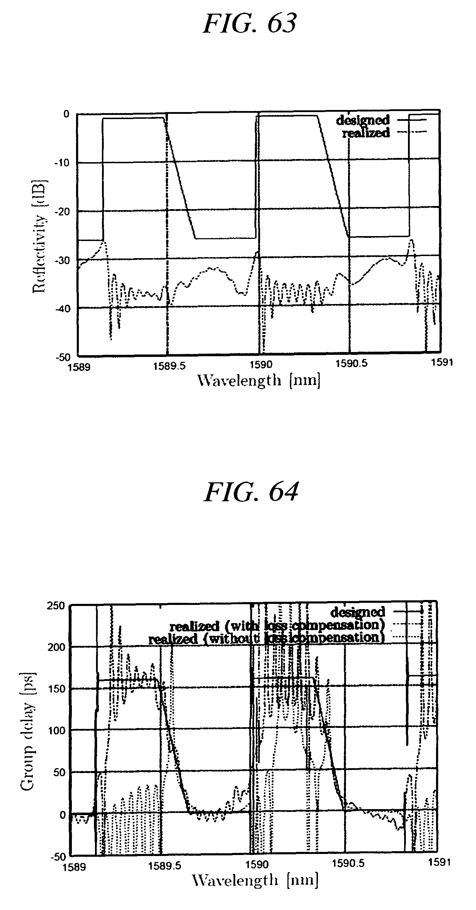

FIG. 63 shows the reflectance characteristic of Example 6 (designed). Also, in FIG. 63, the reflectance characteristic (realized) in the case of the transmission loss of the dispersion compensation device of Example 6 becoming 10 dB is shown simultaneously.

FIG. 64 shows the group delay characteristic of that case. In the drawing, the characteristic of Example 6 in which loss compensation is performed (realized (with loss compensation)) and the characteristic of Comparative Example 6 in which loss compensation is not performed (realized (without loss compensation)) are compared. In Example 6 in which loss compensation is performed, a characteristic that is closer to the desired characteristic (designed) is obtained.

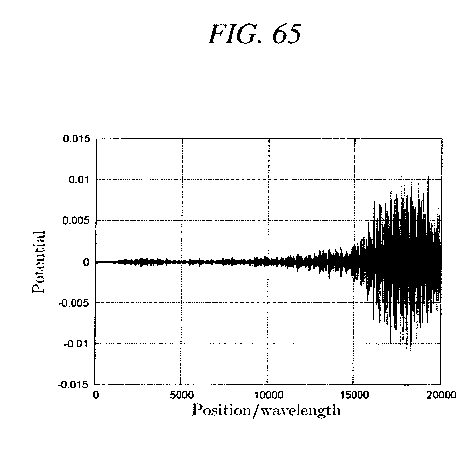

FIG. 65 shows the potential distribution obtained by the design of Example 6. In the graph, the fluctuation of the potential at the entrance of the dispersion compensation device (left side in the drawing) is small on average, and a signal reflected in the vicinity of the entrance, that is, a long-wavelength signal is slightly reflected in the channel. On the other hand, the potential fluctuates comparatively wildly at the inner part of the dispersion compensation device (right side in the drawing), and a signal reflected at a place far from the entrance, that is, a short-wavelength signal is greatly reflected in the channel. In fact, since there is a transmission loss in a waveguide of a dispersion compensation device, the overall wavelength dependency of the reflectivity of the signal is flattened by the design. The core width of a NPWG that is designed based on the potential distribution of FIG. 65 has a distribution shape in which, from one end side in the light propagation direction of the NPWG (entrance side) toward the other end side, the width fluctuations gradually increase and has a fluctuation maximal portion in the vicinity of the other end side.

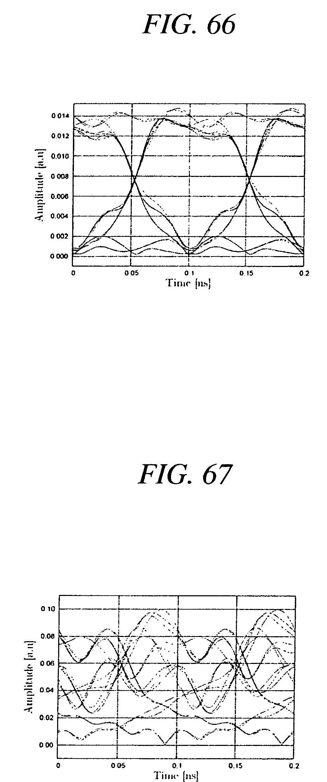

FIG. 66 shows the eye pattern of a 10 Gb/s NRZ pulse after performing dispersion compensation with the device of Example 6 on a signal in a channel with a wavelength region of [1589.99 nm to 1590.83 nm] that has passed through a S-SMF with a length of 50 km. FIG. 67 shows the eye pattern of a 10 Gb/s NRZ pulse after passing through the dispersion compensation device of Comparative Example 6 that does not compensate the transmission loss. Compared with the Comparative Example 6 that does not compensate the transmission loss (FIG. 67), in the Example 6 that compensates the transmission loss (FIG. 66), the transmission characteristic significantly improved.

[Industrial Applicability]

The optical waveguide-type wavelength dispersion compensation device of the present invention has an optical waveguide as a reflection-type wavelength dispersion compensation device in which the equivalent refractive index of this core changes unevenly along the light propagation direction by changing the physical dimensions of the core that is embedded in cladding. This core is designed by: (a) first, setting a first desired reflection spectrum, ignoring transmission losses of the optical waveguide, and designing an optical waveguide that is capable of compensating the wavelength dispersion of an optical fiber to be compensated; (b) next, deriving a wavelength dependency characteristic of a transmission loss amount of this optical waveguide from the effective length of the optical waveguide designed in process (a); and (c) next adding a reverse dependency characteristic of the wavelength dependency characteristic to the first reflection spectrum to correct a second reflection spectrum, and redesigning an equivalent refractive index distribution of the optical waveguide designed in the process (a) by using this second reflection spectrum.

**Claims**

1. A manufacturing method of an optical waveguide-type wavelength dispersion compensation device (1, 20) that has an optical waveguide (10) as a reflection-type wavelength dispersion compensation device in which an equivalent refractive index of a core (11) changes unevenly along the light propagation direction by changing the physical dimensions of the core (11) that is embedded in a cladding (12), comprising:

   designing the core (11) by:

   (a) setting a first desired reflection spectrum, ignoring transmission losses of the optical waveguide, and designing an optical waveguide (10) that is capable of compensating a wavelength dispersion of an optical fiber (2) to be compensated;
   (b) deriving a wavelength dependency characteristic of a transmission loss amount of the optical waveguide (10) from an effective length of the optical waveguide designed in process (a); and
   (c) adding a reverse dependency characteristic of the wavelength dependency characteristic to the first reflection spectrum to correct it to a second reflection spectrum, and redesigning the equivalent refractive index distribution of the optical waveguide (10) designed in the process (a) by using the second reflection spectrum, and

   forming the optical waveguide (10) including the core designed in the processes (a) to (c).

2. The manufacturing method of the optical waveguide-type wavelength dispersion compensation device (1, 20) according to claim 1, wherein:

   a wavelength region to be dispersion compensated of the optical waveguide (10) is divided into a plurality of channels; and
   the optical waveguide (10) having a dispersion compensation characteristic in which wavelength dispersion of the optical fiber (2) to be compensated is compensated in the wavelength region of each channel.

3. The manufacturing method of the optical waveguide-type wavelength dispersion compensation device (1, 20) according to claim 1, wherein
   a width of the core (11) is unevenly distributed along the light propagation direction.

4. The manufacturing method of the optical waveguide-type wavelength dispersion compensation device (1, 20) according to claim 3, wherein
   the width of the core (11) is unevenly distributed along the light propagation direction so that both sides in the width direction of the core (11) become symmetrical from a center of the core (11).

5. The manufacturing method of the optical waveguide-type wavelength dispersion compensation device (1, 20) according to claim 3, wherein
   the width of the core (11) is unevenly distributed along the light propagation direction so that both sides in the width direction of the core (11) become asymmetrical from a center of the core (11).

6. The manufacturing method of the optical waveguide-type wavelength dispersion compensation device (1, 20) according to claim 3, wherein
   the width of the core (11) being unevenly distributed along the light propagation direction on one side only among both sides in the width direction of the core (11) from a center of the core (11).

7. The manufacturing method of the optical waveguide-type wavelength dispersion compensation device (1, 20) according to claim 1, wherein

the core (11) is provided in a linear manner within the optical waveguide (10).

8. The manufacturing method of the optical waveguide-type wavelength dispersion compensation device (1, 20) according to claim 1, wherein
the core (11) is provided in a meandering manner within the optical waveguide (10).

9. The manufacturing method of the optical waveguide-type wavelength dispersion compensation device (1, 20) according to claim 1, wherein a width of the core (11) have a distribution shape in which width fluctuations gradually increase from one end side in the light propagation direction of the optical waveguide (10) toward the other end side, and
have a fluctuation maximal portion in the vicinity of the other end side.

10. The manufacturing method of the optical waveguide-type wavelength dispersion compensation device (1, 20) according to claim 1, wherein
a width of the core (11) has a distribution shape comprising:

a center portion in which the width fluctuations are small from one end side in the light propagation direction of the optical waveguide (10) toward the other end side;
a first fluctuation portion on one side in which the width fluctuations are greater than the center portion; and
a fluctuation maximal portion on the other end side in which the width fluctuations are greater than the first fluctuation portion.

11. The manufacturing method of the optical waveguide-type wavelength dispersion compensation device (1, 20) according to claim 1, wherein:

one end of the optical waveguide (10) is a transmitting end (14), and the other end of the optical waveguide is a reflecting end (13);
the transmitting end (14) is terminated with a non-reflecting end (13); and
the optical output is taken out via a circulator (15) or a directional coupler at the reflecting end.

12. The manufacturing method of the optical waveguide-type wavelength dispersion compensation device (1, 20) according to claim 1, wherein
the optical waveguide (10) has a dispersion compensation characteristic that negates wavelength dispersion of the optical fiber (2) of a predetermined length to be compensated, in a predetermined wavelength band.

13. The manufacturing method of the optical waveguide-type wavelength dispersion compensation device (1, 20) according to claim 1, wherein
the optical waveguide (10) has a characteristic in which, with a central wavelength $\lambda_C$ in a range of 1490 nm $\leq \lambda_C$ $\leq$ 1613 nm, and an operating band $\Delta$BW in the range of 0.1 nm $\leq \Delta$BW $\leq$ 60 nm, a dispersion (D) is in a range of -3,000 ps/nm $\leq$ D $\leq$ 3,000 ps/nm, and a relative dispersion slope (RDS) is in a range of -0.1 nm$^{-1}$ $\leq$ RDS $\leq$ 0.1 nm$^{-1}$.

14. The manufacturing method of the optical waveguide-type wavelength dispersion compensation device (1, 20) according to claim 1, wherein
an equivalent refractive index distribution of the core (11) along the light propagation direction of the waveguide (10) is designed by a design method, the design method comprises:

solving an inverse scattering problem that numerically derives a potential function from the spectrum data of a reflection coefficient using a Zakharov-Shabat equation; and
estimating a potential for realizing a desired reflection spectrum from a value obtained by the inverse scattering problem.

15. The manufacturing method of the optical waveguide-type wavelength dispersion compensation device (1, 20) according to claim 14, wherein
the equivalent refractive index distribution of the core (11) along the light propagation direction of the waveguide (10) is designed by:

reducing to a Zakharov-Shabat equation having a potential that is derived from a differential of a logarithm of the equivalent refractive index of the optical waveguide, using a wave equation that introduces a variable of the amplitude of the electric power wave that propagates at the front and rear of the optical waveguide, and solving as an inverse scattering problem that numerically derives a potential function from spectrum data of a reflection coefficient;

estimating a potential for realizing a desired reflection spectrum from a value obtained by the inverse scattering problem;

finding the equivalent refractive index based on the potential; and

calculating a dimensions of the core along the light propagating direction of the optical waveguide (10) from the relationship between a predetermined thickness of the core, the equivalent refractive index, and the dimensions of the core that are found in advance.

16. The manufacturing method of the optical waveguide-type wavelength dispersion compensation device (1, 20) according to claim 14, wherein

the equivalent refractive index distribution of the core along the light propagating direction of the optical waveguide (10)

is a nearly periodic structure in the scale of the central wavelength of the band to be dispersion compensated and has a two-hierarchical structure of a non-periodic structure that is decided by the inverse scattering problem in a larger scale than the central wavelength.

17. The method of manufacturing an optical waveguide-type wavelength dispersion compensation device (1, 20) according to any one of claims 1 to 16, wherein

the forming the optical waveguide (10) comprises:

providing a lower cladding layer of an optical waveguide (10);

providing a core layer with a refractive index that is greater than the lower cladding layer on the lower cladding layer;

forming the core based on the design of the core (11) by applying a processing that, in the core layer, leaves a predetermined core shape designed so that an equivalent refractive index of the core (11) changes unevenly along a light propagation direction and removes the other portions; and

providing an upper cladding layer to cover the core.

**Patentansprüche**

1. Ein Herstellungsverfahren für eine optische wellenleiterartige Vorrichtung (1, 20) zur Kompensation einer Wellenlängenstreuung, die einen optischen Wellenleiter (10) als eine reflektionsartige Vorrichtung zur Kompensation einer Wellenlängenstreuung aufweist, in welcher ein äquivalenter Brechungsindex eines Kerns (11) sich ungleichmäßig entlang der Lichtausbreitungsrichtung durch Änderung der physikalischen Dimensionen des Kerns (11), der in eine Verkleidung (12) eingebettet ist, sich ändert, umfassend:

Erstellen des Kerns (11) durch:

(a) Einstellen eines ersten gewünschten Reflektionsspektrums mit Ignorieren der Transmissionsverluste des optischen Wellenleiters, und Erstellen eines optischen Wellenleiters (10), der in der Lage ist, eine zu kompensierende Wellenlängenstreuung einer optischen Faser (2) zu kompensieren;

(b) Ableiten einer Wellenlängenabhängigkeitscharakteristik einer Transmissionsverlustmenge des optischen Wellenleiters (10) von einer effektiven Länge des in dem Verfahren (a) erstellten optischen Wellenleiters; und

(c) Zufügen einer umgekehrten Abhängigkeitscharakteristik der Wellenlängenabhängigkeitscharakteristik zu dem ersten Reflektionsspektrum, um dieses zu einem zweiten Reflektionsspektrum zu korrigieren, und erneutes Erstellen der äquivalenten Brechungsindexverteilung des in dem Prozess (a) erstellten optischen Wellenleiters (10) unter Verwendung des zweiten Reflektionsspektrums, und

Ausbilden des optischen Wellenleiters (10), der den in den Prozessen (a) bis (c) erstellten Kerns enthält.

2. Herstellungsverfahren der optischen wellenleiterartigen Vorrichtung (1, 20) zur Kompensation einer Wellenlängenstreuung gemäß Anspruch 1, wobei:

ein Wellenlängenbereich, der einer Streuungskompensation des optischen Wellenleiters (10) unterliegen soll, in eine Vielzahl von Kanälen unterteilt ist; und

der optische Wellenleiter (10), der eine Streuungskompensationscharakteristik aufweist, in welcher die zu kompensierende Wellenlängenstreuung der optischen Faser (2) in dem Wellenlängenbereich von jedem Kanal kompensiert wird.

3. Herstellungsverfahren der optischen wellenleiterartigen Vorrichtung (1, 20) zur Kompensation einer Wellenlängenstreuung gemäß Anspruch 1, wobei eine Breite des Kerns (11) ungleichmäßig entlang der Lichtausbreitungsrichtung verteilt ist.

4. Herstellungsverfahren der optischen wellenleiterartigen Vorrichtung (1, 20) zur Kompensation einer Wellenlängenstreuung gemäß Anspruch 3, wobei die Breite des Kerns (11) ungleichmäßig entlang der Lichtausbreitungsrichtung verteilt ist, so dass beide Seiten in der Breitenrichtung des Kerns (11) von einem Zentrum des Kerns (11) symmetrisch werden.

5. Herstellungsverfahren der optischen wellenleiterartigen Vorrichtung (1, 20) zur Kompensation einer Wellenlängenstreuung gemäß Anspruch 3, wobei die Breite des Kerns (11) ungleichmäßig entlang der Lichtausbreitungsrichtung verteilt ist, so dass beide Seiten in der Breitenrichtung des Kerns (11) von einem Zentrum des Kerns (11) asymmetrisch werden.

6. Herstellungsverfahren der optischen wellenleiterartigen Vorrichtung (1, 20) zur Kompensation einer Wellenlängenstreuung gemäß Anspruch 3, wobei die Breite des Kerns (11) ungleichmäßig entlang der Lichtausbreitungsrichtung auf nur einer Seite von beiden Seiten in der Breitenrichtung des Kerns (11) von einem Zentrum des Kerns (11) verteilt ist.

7. Herstellungsverfahren der optischen wellenleiterartigen Vorrichtung (1, 20) zur Kompensation einer Wellenlängenstreuung gemäß Anspruch 1, wobei der Kern (11) in einer linearen Weise innerhalb des optischen Wellenleiters (10) vorgesehen ist.

8. Herstellungsverfahren der optischen wellenleiterartigen Vorrichtung (1, 20) zur Kompensation einer Wellenlängenstreuung gemäß Anspruch 1, wobei der Kern (11) in einer mäandernden Weise innerhalb des optischen Wellenleiters (10) vorgesehen ist.

9. Herstellungsverfahren der optischen wellenleiterartigen Vorrichtung (1, 20) zur Kompensation einer Wellenlängenstreuung gemäß Anspruch 1, wobei eine Breite des Kerns (11) eine Verteilungsform aufweist, in welcher sich die Breitenfluktuationen graduell von einer Endseite in der Lichtausbreitungsrichtung des optischen Wellenleiters (10) hin zu der anderen Endseite erhöhen, und einen maximalen Fluktuationsteil in der Umgebung der anderen Endseite aufweist.

10. Herstellungsverfahren der optischen wellenleiterartigen Vorrichtung (1, 20) zur Kompensation einer Wellenlängenstreuung gemäß Anspruch 1, wobei
eine Breite des Kerns (11) eine Verteilungsform aufweist, die umfasst:

einen zentralen Teil, in welchem die Breitenfluktuationen von einer Endseite in der Lichtausbreitungsrichtung des optischen Wellenleiters (10) hin zu der anderen Endseite klein sind;
ein erster Fluktuationsteil auf einer Seite, in welcher die Breitenfluktuationen größer sind als im zentralen Teil; und
einen maximalen Fluktuationsteil auf der anderen Endseite, in welchem die Breitenfluktuationen größer sind als im ersten Fluktuationsteil.

11. Herstellungsverfahren der optischen wellenleiterartigen Vorrichtung zur Kompensation einer Wellenlängenstreuung (1, 20) gemäß Anspruch 1, wobei:

ein Ende des optischen Wellenleiters (10) ein übertragendes Ende (14) ist und das andere Ende des optischen Wellenleiters ein reflektierendes Ende (13) ist;
wobei das übertragende Ende (14) mit einem nicht reflektierenden Ende (13) terminiert ist; und
der optische Ausgang über einen Zirkulator (15) oder einen Richtkoppler an dem reflektierenden Ende herausgenommen wird.

12. Herstellungsverfahren der optischen wellenleiterartigen Vorrichtung (1, 20) zur Kompensation der Wellenlängenstreuung gemäß Anspruch 1, wobei der optische Wellenleiter (10) eine Verteilungskompensationscharakteristik aufweist, die die zu kompensierende Wellenlängenverteilung der optischen Faser (2) mit einer vorbestimmten Länge in einem vorbestimmten Wellenlängenband negiert.

13. Herstellungsverfahren der optischen wellenleiterartigen Vorrichtung (1, 20) zur Kompensation der Wellenlängenstreuung gemäß Anspruch 1, wobei der optische Wellenleiter (10) eine Charakteristik aufweist, in welcher mit einer zentrischen Wellenlänge $\lambda_C$ in einem Bereich von 1490 nm $\leq \lambda_C \leq$ 1613 nm, und einem Frequenzband $\Delta BW$ in dem Bereich von 0,1 nm $\leq \Delta BW \leq$ 60 nm, eine Streuung (D) in einem Bereich von -3000 ps/nm $\leq$ D $\leq$ 3000 ps/nm ist, und eine relative Streuungsneigung (RDS) in einem Bereich von -0,1 nm$^{-1} \leq$ RDS $\leq$ 0,1 nm$^{-1}$ ist.

14. Herstellungsverfahren der optischen wellenleiterartigen Vorrichtung (1, 20) zur Kompensation der Wellenlängenstreuung gemäß Anspruch 1, wobei
eine äquivalente Brechungsindexverteilung des Kerns (11) entlang der Lichtausbreitungsrichtung des Wellenleiters (10) durch ein Erstellungsverfahren erstellt wird, wobei das Erstellungsverfahren umfasst:

Lösen eines inversen Streuungsproblems, das numerisch eine Potentialfunktion von den Spektrendaten eines Reflektionskoeffizienten unter Verwendung einer Zakharov-Shabat-Gleichung ableitet; und
Abschätzen eines Potenzials zur Realisierung eines gewünschten Reflektionsspektrums von einem Wert, der durch das inverse Streuungsproblem erhalten worden ist.

15. Herstellungsverfahren der optischen wellenleiterartigen Vorrichtung (1, 20) zur Kompensation der Wellenlängenstreuung gemäß Anspruch 14, wobei
die äquivalente Brechungsindexverteilung des Kerns (11) entlang der Lichtausbreitungsrichtung des Wellenleiters (10) erstellt wird durch:

Reduzierung zu einer Zakharov-Shabat-Gleichung, die ein Potential aufweist, das von einem Differential eines Logarithmus des äquivalenten Brechungsindex des optischen Wellenleiters abgeleitet wird, unter Anwendung einer Wellengleichung, die eine Variable der Amplitude der elektrischen Leistungswelle einführt, die sich an der Front und am Ende des optischen Wellenleiters ausbreitet, und Lösen als ein inverses Streuungsproblem, das numerisch eine Potentialfunktion von Spektrendaten eines Reflektionskoeffizienten ableitet;
Abschätzen eines Potentials zur Realisierung eines gewünschten Reflektionsspektrums von einem Wert, der durch das inverse Streuungsproblem erhalten wurde;
Auffinden des äquivalenten Brechungsindex basierend auf dem Potential; und
Berechnen einer Dimension des Kerns entlang der Lichtausbreitungsrichtung des optischen Wellenleiters (10) von der Beziehung zwischen einer vorbestimmten Dicke des Kerns, dem äquivalenten Brechungsindex und der Dimension des Kerns, die im Voraus bestimmt wurden.

16. Herstellungsverfahren der optischen wellenleiterartigen Vorrichtung (1, 20) zur Kompensation der Wellenlängenstreuung gemäß Anspruch 14, wobei
die äquivalente Brechungsindexverteilung des Kerns entlang der Lichtausbreitungsrichtung des optischen Wellenleiters (10) eine nahezu periodische Struktur in dem Umfang der zentrischen Wellenlänge des Bandes ist, dessen Streuung zu kompensieren ist, und
eine zwei-hierarchische Struktur einer nicht periodischen Struktur aufweist, die durch das inverse Streuungsproblem in einem größeren Umfang als die zentrischen Wellenlänge bestimmt wird.

17. Herstellungsverfahren der optischen wellenleiterartigen Vorrichtung (1, 20) zur Kompensation der Wellenlängenstreuung gemäß einem der Ansprüche 1 bis 16, wobei die Ausbildung des optischen Wellenleiters (10) umfasst:

Bereitstellen einer unteren Verkleidungsschicht eines optischen Wellenreiters (10),
Bereitstellen einer Kernschicht mit einem Brechungsindex, der größer ist als der der unteren Verkleidungsschicht, auf der unteren Verkleidungsschicht;
Ausbilden des Kerns basierend auf der Erstellung des Kerns (11) durch Anwenden eines Verfahrens, das in der Kernschicht eine vorbestimmte Kernform hinterlässt, die so gestaltet ist, so dass ein äquivalenter Brechungsindex des Kerns (11) sich ungleichmäßig entlang einer Lichtausbreitungsrichtung verändert und die anderen Teile entfernt; und
Bereitstellen einer oberen Verkleidungsschicht, um den Kern zu verkleiden.

**Revendications**

1. Procédé de fabrication d'un dispositif de compensation de dispersion en longueur d'onde de type guide d'onde optique (1, 20) qui comporte un guide d'onde optique (10) sous la forme d'un dispositif de compensation de dispersion en longueur d'onde de type réfléchissant dans lequel un indice de réfraction équivalent d'un coeur (11) varie de façon irrégulière dans le sens de propagation de la lumière par modification des dimensions physiques du coeur (11) qui est intégré dans une gaine (12), comprenant :

   la conception du coeur (11) par :

      (a) établissement d'un premier spectre de réflexion souhaité, sans tenir compte des pertes de transmission du guide d'onde optique, et la conception d'un guide d'onde optique (10) qui est apte à compenser la dispersion en longueur d'onde d'une fibre optique (2) devant être compensée :
      (b) l'obtention d'une caractéristique de dépendance par rapport à la longueur d'onde d'une quantité de perte de transmission du guide d'onde optique (10) à partir d'une longueur effective du guide d'onde optique conçu lors de l'opération (a) ; et
      (c) l'ajout d'une caractéristique de dépendance inverse de la caractéristique de dépendance par rapport à la longueur d'onde au premier spectre de réflexion pour corriger celui-ci en un second spectre de réflexion, et une nouvelle conception de la distribution de l'indice de réfraction équivalent du guide d'onde optique (10) conçu lors de l'opération (a) au moyen du second spectre de réflexion, et

   la formation du guide d'onde optique (10) comprenant le coeur conçu lors des opérations (a) à (c).

2. Procédé de fabrication du dispositif de compensation de dispersion en longueur d'onde de type guide d'onde optique (1, 20) selon la revendication 1, dans lequel :

   une région de longueur d'onde dont la dispersion doit être compensée du guide d'onde optique (10) est divisée en une pluralité de canaux ; et
   le guide d'onde optique (10) a une caractéristique de compensation de la dispersion dans laquelle la dispersion en longueur d'onde de la fibre optique (2) devant être compensée est compensée dans la région de longueur d'onde de chaque canal.

3. Procédé de fabrication du dispositif de compensation de dispersion en longueur d'onde de type guide d'onde optique (1, 20) selon la revendication 1, dans lequel une largeur du coeur (11) est distribuée de façon irrégulière dans le sens de propagation de la lumière.

4. Procédé de fabrication du dispositif de compensation de dispersion en longueur d'onde de type guide d'onde optique (1, 20) selon la revendication 3, dans lequel la largeur du coeur (11) est distribuée de façon irrégulière dans le sens de propagation de la lumière de sorte que les deux côtés dans le sens de la largeur du coeur (11) sont symétriques par rapport à un centre du coeur (11).

5. Procédé de fabrication du dispositif de compensation de dispersion en longueur d'onde de type guide d'onde optique (1, 20) selon la revendication 3, dans lequel la largeur du coeur (11) est distribuée de façon irrégulière dans le sens de propagation de la lumière de sorte que les deux côtés dans le sens de la largeur du coeur (11) sont asymétriques par rapport à un centre du coeur (11).

6. Procédé de fabrication du dispositif de compensation de dispersion en longueur d'onde de type guide d'onde optique (1, 20) selon la revendication 3, dans lequel la largeur du coeur (11) est distribuée de façon irrégulière dans le sens de propagation de la lumière sur un seul des deux côtés dans le sens de la largeur du coeur (11) à partir d'un centre du coeur (11).

7. Procédé de fabrication du dispositif de compensation de dispersion en longueur d'onde de type guide d'onde optique (1, 20) selon la revendication 1, dans lequel le coeur (11) se présente de manière linéaire à l'intérieur du guide d'onde optique (10).

8. Procédé de fabrication du dispositif de compensation de dispersion en longueur d'onde de type guide d'onde optique (1, 20) selon la revendication 1, dans lequel le coeur (11) se présente de manière sinueuse à l'intérieur du guide d'onde optique (10).

**9.** Procédé de fabrication du dispositif de compensation de dispersion en longueur d'onde de type guide d'onde optique (1, 20) selon la revendication 1, dans lequel une largeur du coeur (11) a une forme de distribution dans laquelle des variations de largeur augmentent progressivement à partir d'un côté d'extrémité dans le sens de propagation de la lumière du guide d'onde optique (10) vers l'autre côté d'extrémité, et ont une partie de variation maximale à proximité de l'autre extrémité.

**10.** Procédé de fabrication du dispositif de compensation de dispersion en longueur d'onde de type guide d'onde optique (1, 20) selon la revendication 1, dans lequel une largeur du coeur (11) a une forme de distribution comprenant :

une partie centrale dans laquelle les variations de largeur sont faibles à partir d'une extrémité dans le sens de propagation de la lumière du guide d'onde optique (10) vers l'autre extrémité ;
une première partie de variation sur un premier côté, dans laquelle les variations de largeur sont plus importantes que dans la partie centrale ; et
une partie de variation maximale à l'autre côté d'extrémité, dans laquelle les variations de largeur sont plus importantes que la première partie de variation.

**11.** Procédé de fabrication du dispositif de compensation de dispersion en longueur d'onde de type guide d'onde optique (1, 20) selon la revendication 1, dans lequel une extrémité du guide d'onde optique (10) est une extrémité émettrice (14) et l'autre extrémité du guide d'onde optique est une extrémité réfléchissante (13) ;
l'extrémité émettrice (14) se termine par une extrémité non réfléchissante (13) ; et
la puissance optique est extraite via un circulateur (15) ou un coupleur directionnel au niveau de l'extrémité réfléchissante.

**12.** Procédé de fabrication du dispositif de compensation de dispersion en longueur d'onde de type guide d'onde optique (1, 20) selon la revendication 1, dans lequel le guide d'onde optique (10) a une caractéristique de compensation de la dispersion qui supprime la dispersion en longueur d'onde de la fibre optique (2) d'une longueur prédéterminée devant être compensée, dans une bande de longueur d'onde prédéterminée.

**13.** Procédé de fabrication du dispositif de compensation de dispersion en longueur d'onde de type guide d'onde optique (1, 20) selon la revendication 1, dans lequel le guide d'onde optique (10) a une caractéristique dans laquelle, avec une longueur d'onde centrale $\lambda_C$ dans la plage de 1490 nm $\leq \lambda_C \leq$ 1613 nm et une bande de fonctionnement $\Delta$BW dans la plage de 0,1 nm $\leq \Delta$BW $\leq$ 60 nm, une dispersion (D) est dans la plage de -3000 ps/nm $\leq$ D $\leq$ 3000 ps/nm et la pente de dispersion relative (RDS) est dans la plage de -0,1 nm$^{-1}$ $\leq$ RDS $\leq$ 0,1 nm$^{-1}$.

**14.** Procédé de fabrication du dispositif de compensation de dispersion en longueur d'onde de type guide d'onde optique (1, 20) selon la revendication 1, dans lequel une distribution de l'indice de réfraction équivalent du coeur (11) dans le sens de propagation de la lumière du guide d'onde (10) est conçue grâce à un procédé de conception, le procédé de conception comprenant :

la résolution d'un problème de diffusion inverse qui dérive numériquement une fonction de potentiel à partir de données du spectre d'un coefficient de réflexion au moyen d'une équation de Zakharov-Shabat ; et
l'estimation d'un potentiel pour réaliser un spectre de réflexion souhaité à partir d'une valeur obtenue par le problème de diffusion inverse.

**15.** Procédé de fabrication du dispositif de compensation de dispersion en longueur d'onde de type guide d'onde optique (1, 20) selon la revendication 14, dans lequel la distribution de l'indice de réfraction équivalent du coeur (11) dans le sens de propagation de la lumière du guide d'onde (10) est conçue par :

réduction à une équation de Zakharov-Shabat ayant un potentiel qui est obtenu à partir d'un différentiel d'un logarithme de l'indice de réfraction équivalent du guide d'onde optique, au moyen d'une équation d'onde qui introduit une variable de l'amplitude de l'onde d'énergie électrique qui se propage à l'avant et à l'arrière du guide d'onde optique, et sa résolution en tant que problème de diffusion inverse qui dérive numériquement une fonction de potentiel à partir des données spectrales d'un coefficient de réflexion ;
estimation d'un potentiel pour réaliser un spectre de réflexion souhaité à partir d'une valeur obtenue par le problème de diffusion inverse ;
obtention de l'indice de réfraction équivalent à partir du potentiel ; et
calcul des dimensions du coeur dans le sens de propagation de la lumière du guide d'onde optique (10) à partir de la relation entre l'épaisseur prédéterminée du coeur, l'indice de réfraction équivalent, et les dimensions du coeur qui ont été obtenues à l'avance.

16. Procédé de fabrication du dispositif de compensation de dispersion en longueur d'onde de type guide d'onde optique (1, 20) selon la revendication 14, dans lequel

la distribution de l'indice de réfraction équivalent du coeur dans le sens de propagation de la lumière du guide d'onde optique (10)

est une structure quasi-périodique à l'échelle de la longueur d'onde centrale de la bande dont la dispersion doit être compensée et

a une structure bi-hiérarchique d'une structure non périodique qui est décidée par le problème de diffusion inverse à plus grande échelle que la longueur d'onde centrale.

17. Procédé de fabrication du dispositif de compensation de dispersion en longueur d'onde de type guide d'onde optique (1, 20) selon l'une quelconque des revendications 1 à 16, dans lequel

la formation du guide d'onde optique (10) comprend :

la fourniture d'une couche de gaine inférieure d'un guide d'onde optique (10) ;
la fourniture d'une couche de coeur ayant un indice de réfraction qui est supérieur à celui de la couche de gaine inférieure sur la couche de gaine inférieure ;
la formation du coeur à partir de la conception du coeur (11) par application d'un traitement qui, dans la couche de coeur, laisse une forme de coeur prédéterminée conçue de telle sorte que l'indice de réfraction équivalent du coeur (11) change de façon irrégulière dans le sens de propagation de la lumière et élimine les autres parties ; et
la fourniture d'une couche de gaine supérieure pour couvrir le coeur.

## FIG. 1

*FIG. 2*

## FIG. 3

## FIG. 4

*FIG. 5*

*FIG. 6*

*FIG. 7*

## FIG. 8

## FIG. 9

## FIG. 10

## FIG. 11

## FIG. 12

## FIG. 13

## FIG. 14

## FIG. 15

## FIG. 16

*FIG. 17*

*FIG. 18*

*FIG. 19*

*FIG. 20*

## FIG. 21

## FIG. 22

## FIG. 23

*FIG. 24*

*FIG. 25*

FIG. 26A

FIG. 26B

## FIG. 27

## FIG. 28

## FIG. 29

## FIG. 30

## FIG. 31

## FIG. 32

*FIG. 33*

*FIG. 34*

## FIG. 35

## FIG. 36

*FIG. 37*

*FIG. 38*

*FIG. 39*

*FIG. 40*

FIG. 41

## FIG. 42

## FIG. 43

*FIG. 44*

*FIG. 45*

# FIG. 46

## FIG. 47

## FIG. 48

## FIG. 49

## FIG. 50

FIG. 51

# FIG. 52

# FIG. 53

## FIG. 54

## FIG. 55

## FIG. 56

## FIG. 57

## FIG. 58

## FIG. 59

FIG. 60

## FIG. 61

## FIG. 62

## FIG. 63

## FIG. 64

FIG. 65

## FIG. 66

## FIG. 67

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007331006 A
- JP 3857211 B
- JP 3819264 B
- JP 2004325549 A
- WO 03010586 A
- JP 3852409 B
- JP 2005275101 A
- JP 2004077665 A

**Non-patent literature cited in the description**

- **K. TAKIGUCHI.** Dispersion slope equalizer for dispersion shifted fiber using a lattice-form programmable optical filter on a planar lightwave circuit. *Journal of Lightwave Technology,* 1998, vol. 16 (9), 1647-1656
- **J. E. SIPE ; L. POLADIAN ; C. MARTIJN DE STERKE.** Propagation through nonuniform grating structures. *J. Opt. Soc. Am. A,* 1994, vol. 11 (4), 1307-1320
- **P. V. FRANGOS ; D. L. JAGGARD.** A numerical solution to the Zakharov-Shabat inverse scattering problem. *IEEE Trans. Antennas and Propag.,* 1991, vol. 39 (1), 74-79